# EUROPEAN PATENT SPECIFICATION

(11) **EP 4 625 887 B1**
(45) Date of publication and mention of the grant of the patent: **02.12.2026**
(21) Application number: 25157530.4
(22) Date of filing: 12.02.2025
(51) Int. Cl.: H04L 9/40, G06F 21/44

(54) **SYSTEM AND METHOD FOR PERFORMING ON-BOARDING OF END DEVICES OF VEHICLES**
SYSTEM UND VERFAHREN ZUR DURCHFÜHRUNG VON BORDAUSRÜSTUNGEN VON FAHRZEUGEN
SYSTÈME ET PROCÉDÉ POUR EFFECTUER UN À BORD DE DISPOSITIFS D'EXTRÉMITÉ DE VÉHICULES

(30) Priority: 28.03.2024 IN 202441025720
(43) Date of publication of application: 01.10.2025
(73) Proprietor: Wipro Limited, 560 035 Karnataka (IN)
(72) Inventor: Kanala, Kishore, Karnataka (IN); Chaudhuri, Chandra Sekhar, Karnataka (IN)
(74) Representative: Finnegan Europe LLP

(56) References cited:
- CN-B- 117 221 010
- US-A1- 2018 123 804

## Description

### TECHNICAL FIELD

The present disclosure generally relates to onboarding of end devices of vehicles and in particular relates to a system and method for performing on-boarding of end devices of vehicles.

### BACKGROUND

The following description includes information that may be useful in understanding the present disclosure. It is not an admission that any of the information provided herein is prior art or relevant to the presently claimed disclosure, or that any publication specifically or implicitly referenced is prior art.

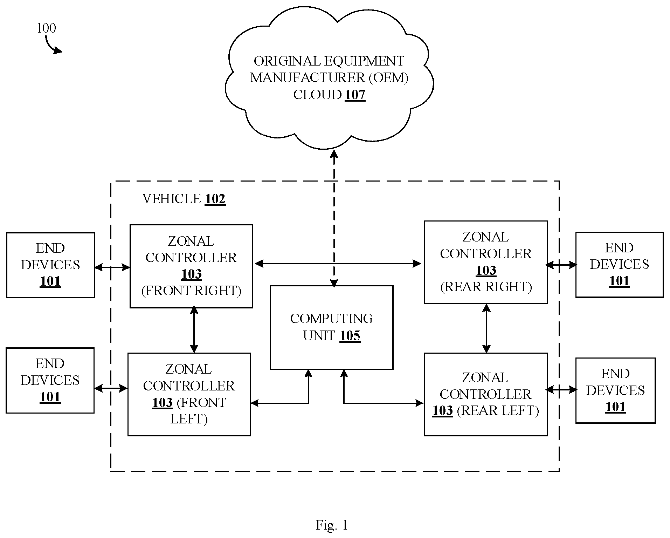

Recently there has been tremendous growth in the automobile industry in providing software defined vehicles (SDVs). A Software Defined Vehicle (SDV) is a vehicle whose functionality and features are managed and updated either partially or completely through software during its lifetime. The SDV is enabled by a next generation of automotive architecture called Zonal Electrical/Electronics (E/E) architecture. In the Zonal E/E architecture **100,** each of the end device **101** is connected to a zonal controller **103** and processing happens in the corresponding zonal controller (also referred to as zonal gateway) 103 as well as on a computing unit **105** or a centralized high-performance computing unit (HPC) as shown in Fig. 1. The vehicle **102** is equipped with the zonal controllers **103** on front left end, front right end, rear left end, and rear right end of the vehicle **102.** It may be worth noting that though only four zonal controllers **103** are shown, there can be any number of zonal controllers equipped in the vehicle **102** to perform the desired functionality. Further, the computing unit **105** of the vehicle **102** is connected to the OEM cloud **105** to determine whether the end device **101** is from authorized end device manufacturer.

One of the key characteristics of the SDVs is updatability of both software and hardware components. This means, the SDVs need to support new additional end devices or device updates during the lifetime of the vehicle **102.** Examples of such end devices may comprise cameras, sensor devices, other ECUs, battery packs, actuators etc. During the life of the vehicle **102** on road, they will require 'Features on demand'. For example, heated seats or latest steering wheels may be booked at any time post purchase of the vehicle **102** provided the end device hardware is already installed on the vehicle or the end device hardware can be retrofitted to the vehicle **102.** As such, SDVs are expected to refresh themselves with new features.

There are two categories of such features - one in which new feature doesn't involve upgraded or new end device (like upgraded ECU, sensor or actuator) and only software update of the end device brings in the new feature. The second category involves upgraded or new end device installation where authentication of the end device would be required.

At present many Original Equipment Manufacturers (OEMs) are taking care of adding new features where the end device support is already available. Used herein, "OEM" is a company that manufactures the vehicle (SDV). There will be scenarios where there will be a new software version of the same end device. The new version may be capable of supporting additional features in software. Further, there will be scenarios where there will be a need to add a totally new end device to keep vehicle up-to-date in market. Since the update or adding an end device is supported by SDV, there is need of a method to authenticate them before those new/upgraded end devices can start communicating with other components in the vehicle. Therefore, the new end device will need software packages to be added.

However, currently there is no solution available to download the software automatically related to the new end device added to the vehicle. Currently, software in vehicles is moving from being static functional components to a set of services that can be independently updated or added Over-The-Air (OTA) after vehicle gets on to the road. This enables OEMs to decide the price of the vehicles based on software services that are deployed in the vehicle, thus making capabilities of vehicles defined by software. The majority of future vehicles are expected to be software defined vehicles (SDVs).

Conventionally, in existing solutions, most end devices are either pre-built in the vehicle or are added/updated by authorized service centers or by Original Equipment Manufacturers (OEMs) by checking if they are from authorized end device manufacturer. There are some mechanisms that are available for authenticating end devices/peripherals before they are used within the vehicle. These are following:
1. No authentication approach: In this approach it is assumed that the end device is from an authentic source. This is a risky approach as any end device can get connected to the vehicle and can lead to security challenges.
2. Serial number/ID based authentication: In this approach, Serial number/ID is provided by the end device to the vehicle for validation. If the Serial number/ID is valid, then the end device is accepted, else, authentication is denied. One of the problems with this approach is that since the serial number/ID is a constant/fixed string, if it is found out by hacker through some means such as logs or analyzing memory, this can be used to get access to the vehicle in the subsequent sessions. Moreover, in this approach, authentication is only one way i.e., the end device is authenticated by the vehicle.
3. Challenge-response based authentication: In this approach, the end device (responder) requests the vehicle (challenger) to send a challenge i.e., a random number value. This random number is sent to the responder by the challenger. The challenger and the responder independently encrypt the random number using a pre-stored secret key on both sides to generate encrypted values (EV-ch, EV-resp) respectively. The responder sends the EV-resp to the challenger for comparing it with the EV-ch. If they match, then end device is accepted, else, it is not authenticated. The first problem with this approach is that it is also one way i.e., the end device is authenticated by the vehicle. The second problem with this approach is that authentication is dependent on only value (that is, challenge) which may be risky as hackers may find ways to guess the challenge. Third problem is that challenge-response pair may get compromised. Also, existing authentication mechanisms do not address the need of OEM and vehicle owner approving the end device before it is used.

Further, the existing authentication mechanisms (mentioned above) are decentralized where each end device is authenticated by a corresponding component such as Zonal controller and/or HPC on the vehicle. This kind of decentralized approach doesn't give OEM of the vehicle flexibility to manage authentication mechanisms.

However, the existing solutions (as mentioned above) fail to disclose anything regarding multi-level authentication for onboarding of end device in vehicles. Further, the existing solution also fails to disclose usage of nonce with additional security and to take vehicle owner's confirmation before onboarding the end device in the vehicle. Furthermore, the existing solution fails to include mutual authentication of the end device and the vehicle and checking for software installation for onboarding the end device in the vehicles.

CN 117221010B discloses "Cloud-based vehicle ECU identity authentication method, communication method and system".

US 2008/094250 A1 discloses "System and method for authenticating and authorizing devices".

Thus, there exists a need for an improved method and system for performing onboarding of end devices of vehicles, which overcomes the above-mentioned limitations of the conventional methods.

The above-mentioned drawbacks/difficulties/disadvantages of the conventional techniques are explained just for exemplary purpose and this disclosure and description mentioned below would never limit its scope only such problem. A person skilled in the art may understand that this disclosure and below mentioned description may also solve other problems or overcome the above-mentioned drawbacks/disadvantages of the conventional arts which are not explicitly captured above.

### SUMMARY

The present disclosure overcomes one or more shortcomings of the prior art and provides additional advantages discussed throughout the present disclosure. Additional features and advantages are realized through the techniques of the present disclosure. Other embodiments and aspects of the disclosure are described in detail herein and are considered a part of the claimed disclosure.

In accordance with the invention, there is provided: a method of performing onboarding of at least one end device of a vehicle, as recited in claim 1; an Original Equipment Manufacturer, OEM, cloud, coupled to a vehicle and configured to perform the method of any of claims 1 to 6, as recited in claim 13; and a system for performing onboarding of at least one end device of a vehicle, as recited in claim 14.

In one non-limiting embodiment of the present disclosure, a method of performing onboarding of at least one end device is disclosed. The method comprises performing a multi-level authentication of the at least one end device, by performing: a first level two-way authentication between the vehicle and the at least one end device, a second level authentication of the at least one end device, through the vehicle, by an Original Equipment Manufacturer (OEM) cloud. Thereafter, the method comprising a third level authentication of the at least one end device, by the OEM cloud. Finally, the method comprising installing software components related to at least one end device from the OEM cloud to the vehicle based on determining availability of the software components in the OEM cloud for onboarding the at least one end device in the vehicle.

In one non-limiting embodiment of the present disclosure, a method of performing onboarding of at least one end device of a vehicle is disclosed. The method comprises performing a first level two-way authentication between the vehicle and the at least one end device. Thereafter, the method comprises upon performing the multi-level authentication of the at least one end device, installing software components related to at least one end device from the OEM cloud to the vehicle based on determining availability of the software components in the OEM cloud for onboarding the at least end device in the vehicle.

In one non-limiting embodiment of the present disclosure, a system for performing onboarding of at least one end device of a vehicle is disclosed. The system comprises a computing unit of the vehicle, at least one end device coupled to the computing unit, and an Original Equipment Manufacturer (OEM) cloud coupled to the vehicle. The system is configured to perform a multi-level authentication of the at least one end device, by performing a first level two-way authentication between the vehicle and the at least one end device. Further, the system is configured to perform a multi-level authentication of the at least one end device, by performing a second level authentication of the at least one end device, through the vehicle, by the OEM cloud. Thereafter, the system is configured to perform a multi-level authentication of the at least one end device, by performing a third level authentication of the at least one end device, by the OEM cloud. At last, the system is configured to upon performing the multi-level authentication of the at least one end device, install software components related to at least one end device from the OEM cloud to the vehicle based on determining availability of the software components or the software update in the OEM cloud for onboarding the at least one end device in the vehicle.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The embodiments of the disclosure itself, as well as a preferred mode of use, further objectives and advantages thereof, will best be understood by reference to the following detailed description of an illustrative embodiment when read in conjunction with the accompanying drawings. One or more embodiments are now described, by way of example only, with reference to the accompanying drawings in which:
**Fig. 1** shows an example software defined vehicle (SDV) Zonal Electrical/Electronic architecture, in accordance with an embodiment of the present disclosure;
**Fig. 2** shows an exemplary architecture for performing onboarding of end devices of vehicles, in accordance with an embodiment of the present disclosure;
**Fig. 3A** shows a detailed diagram of an end device, in accordance with an embodiment of the present disclosure;
**Fig. 3B** shows a detailed diagram of an Onboard Server (OBS) of a vehicle, in accordance with an embodiment of the present disclosure;
**Fig. 4** illustrates a sequence diagram for performing a first level two-way authentication for performing onboarding of end device of vehicle, for implementing embodiments consistent with the present disclosure;
**Fig. 5** illustrates a sequence diagram for performing a second level authentication between the vehicle, and the OEM cloud, in accordance with an embodiment of the present disclosure;
**Fig. 6** illustrates a sequence diagram for performing a third level authentication between the vehicle owner and the OEM cloud, in accordance with an embodiment of the present disclosure;
**Fig. 7** illustrates a flowchart depicting a method of performing onboarding of an end device of vehicle, in accordance with an embodiment of the present disclosure; and
**Fig. 8** illustrates a flowchart depicting a method of performing a first level two-way authentication between an end device and a vehicle, in accordance with an embodiment of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

The foregoing has broadly outlined the features and technical advantages of the present disclosure in order that the detailed description of the disclosure that follows may be better understood. It should be appreciated by those skilled in the art that the conception and specific embodiment disclosed may be readily utilized as a basis for modifying or designing other structures for carrying out the same purposes of the present disclosure.

The novel features which are believed to be characteristic of the disclosure, both as to its organization and method of operation, together with further objects and advantages will be better understood from the following description when considered in connection with the accompanying Figures. It is to be expressly understood, however, that each of the Figures is provided for the purpose of illustration and description only and is not intended as a definition of the limits of the present disclosure.

The present disclosure is directed to a method and system for performing onboarding of end devices of software defined vehicles (SDVs) by performing multi-level authentication of the end devices. For performing the multi-level authentication of the end devices, the method performs a first level two-way authentication between the vehicle **102** and the end devices based on nonce values. Further, the method performs a second level authentication of the end devices, through the vehicle by an Original Equipment Manufacturer (OEM) cloud. Further, the method performs a third level authentication of the end devices by the OEM cloud **107** using vehicle owner approval mechanism. Thereafter, upon performing the successful multi-level authentication, the method performs installation of software components related to the end devices from the OEM cloud **107** to the vehicle based on determining availability of the software components in the OEM cloud **107.** If the software components are available in the OEM cloud **107,** the OEM cloud **107** transmits a Uniform Resource Indicator for downloading and installing the software components related to the end devices to the vehicle. If the software components are not available in the OEM cloud **107,** the OEM cloud **107** transmits an error message to the end devices via the vehicle. Thus, the present disclosure allows secure onboarding of end devices of vehicles by performing multi-level authentication of the end devices. Also, the present disclosure provides an improved method for authenticating the end devices before onboarding the end devices in the vehicles. Used herein, the term "onboarding" refers to integrating the end devices into the SDVs and enabling the end devices to function seamlessly within the vehicle's software-centric architecture. Additionally, the present disclosure provides a method for automatically determining availability of software components related to end devices and installing the software components from the OEM cloud **107** if the software components are available. In other words, onboarding process may involve: software installation to ensure communication between the end devices and the SDVs. In one example, while onboarding a new camera into the SDV, the system will check and install software packages such as: camera drivers, firmware, middleware, and camera Application Program Interface (API), and update SDV middleware for integrating the camera middleware with SDV.

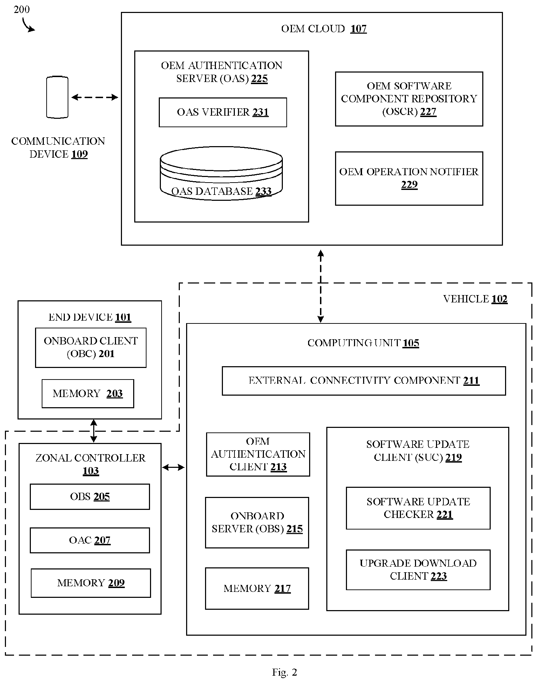

**Fig. 2** shows an exemplary architecture of a system for performing onboarding of end devices **101** of vehicles **102,** in accordance with an embodiment of the present disclosure. The system may be any suitable vehicle environment in which onboarding of end devices **101** may be performed by performing multi-level authentication. The system may comprise end devices **101,** zonal controllers **103,** a computing unit **105,** an OEM cloud **107,** and a communication device **109.** However, the architecture may comprise additional components or devices based on requirements. In some embodiments, the system may be configured to perform the desired functionality of the present disclosure. In another embodiment, the system may comprise one or more components configured to perform the desired functionality of the present disclosure. In an embodiment, the end devices **101** may comprise, but not limited to, cameras, sensors, electronic control unit, battery packs, actuators, etc., to be onboarded on the vehicle **102.** In one embodiment, one or more end device **101** may be onboarded to the vehicle **102.** In some embodiments, the vehicle **102** may be a two-wheeler, a three-wheeler, or four-wheeler, or any vehicle this architecture is applicable. In some embodiments, the vehicle **102** may be an autonomous vehicle, a semi-autonomous vehicle, a hybrid vehicle, or alike which may include software defined components. In an embodiment, the end devices **101** may be configured as an external device connected to the zonal controllers **103** of the vehicle **102.** Each of the end devices **101** may be connected to a corresponding zonal controller **103** as shown in **Fig. 2****.** In an alternative embodiment, the end devices **101** may be configured internally within the vehicle **102** and connected to the zonal controllers **103.** Based on requirements, the end devices **101** may be added to the vehicle **102** at any time during the life of the vehicle **102.**

In some embodiments, the end devices **101** may comprise components which may include, but not limited to, an Onboard Client (OBC) **201** and a memory **203** associated with the end device **101.** However, there may be additional components in each of the end devices **101** discussed later in upcoming paragraphs. The OBC **201** may communicate with the vehicle **102** through the zonal controller **103** of the vehicle **102** for first level two-way authentication between the end device **101** and the vehicle **102.** Once the first level two-way authentication is completed, OBC **201** shares the end device details with the vehicle **102.** In another embodiment, the OBC **201** may share the end device details with the vehicle **102** during the first level two-way authentication.

In some embodiments, the memory **203** may be a secure and persistent storage for storing data such as an initial EndDeviceNonce (iEDN), a corresponding algorithm (Algo-EndDeviceNonce), and a secret key is stored. The memory **203** also stores an initial VehicleNonce (iVN) and a corresponding algorithm (Algo-OBNonce). The data is stored in the memory **203** by the end device manufacturer based on the details received from the OEM any time before onboarding the end device **101** to the vehicle **102.** Further, the memory **203** may store the end device details such as end device serial number (SN), part number, manufacturer details etc., In some implementations, data may be stored within the memory **203** in the form of various data structures. Additionally, the data may be organized using data models, such as relational or hierarchical data models. The other data may include various temporary data and files generated by the OBC **201** while performing various functions of end device **101.**

The architecture further shows sub-components of the zonal controller **103** which may include an Onboard server (OBS) **205,** an OEM authentication client (OAC) **207,** and a memory **209** which may be configured to perform desired functionality of the zonal controller **103.** The desired functionality of the OBS **205** and the OAC **207** is explained in upcoming paragraphs with respect the computing unit **105** of the vehicle **102.** It may be noted to a person skilled in the art that there can be multiple end devices **101** and multiple zonal controllers **103** coupled with each other, however, only one end device **101** and corresponding one zonal controller **103** coupled to each other is shown for the sake of simplicity. The zonal controller **103** is a key component of future automotive architecture called Zonal E/E architecture of SDV. It may be well appreciated by a person skilled in the art that there may be multiple zonal controllers **103** in a vehicle **102** and the end devices **101** may be connected to the at least one of the zonal controllers **103.** The zonal controllers **103** are beneficial because they require minimal processing for receiving the data from the end devices **101** and transmitting the data to a computing unit **105** of the vehicle **102.** A detailed explanation of the present disclosure is provided considering this scenario. In an alternative embodiment, the OBS **215** and OAC **213** may be configured to run on all the zonal controllers **103** and the end device **101** connected to respective zonal controller **103** and may utilize the OBS **215** and OAC **213** pair. In this scenario, the details of the end device **101** may not be transmitted to other zonal controllers **103.** However, the memory **209** and a central processing unit (CPU) of all zonal controllers **103** may be utilized. In this scenario, the processing can happen in all the zonal controllers **103** as well. Further, each of the zonal controllers **103** may be connected to the computing unit **105** or the high-performance computing (HPC) unit of the vehicle **102.**

The computing unit **105** may be referred to as a centralized computing system that takes care of the onboarding process of the end devices **101.** The computing unit **105** may receive the data related to each of the end devices **101** through each of the zonal controllers **103.** As used herein, the term computing unit **105** may refer to an Application Specific Integrated Circuit (ASIC), an electronic circuit, a hardware processor (shared, dedicated, or group), a Field-Programmable Gate Array (FPGA), and memory that execute one or more software or firmware programs, a combinational logic circuit, and/or other suitable components that provide the described functionality. In some embodiments, computing unit **105** may be configured to perform one or more functions of the vehicle **102** for performing onboarding of the end device **101** by performing multi-level authentication. The computing unit **105** may comprise, but not limited to, an external connectivity component **211,** the OAC **213,** an Onboard Server (OBS) **215,** a memory **217,** and a Software Update Client (SUC) **219.** However, the computing unit **105** may comprise additional components which may be required to perform the desired functionality in accordance with the present disclosure.

Further, the external connectivity component **211** may be configured to facilitate a secure communication channel between the OAC **213** and the OEM cloud **107.** In other words, the external connectivity component **211** may be configured to the vehicle connectivity to external entities such as the OEM cloud **107,** partner cloud, etc., The OAC **213** may be used by the OBS **215** to transmit end device details and the vehicle details to the OEM cloud **107.** The OAC **213** may be configured to receive response from the OEM cloud **107** based on success or failure of second level authentication and the third level authentication and transmits the response to the computing unit **105.**

Furthermore, the OBS **215** may communicate with the OBC **201** of the end device **101** through the zonal controller **103** of the vehicle **102** for performing first level two-way authentication between the end device **101** and the vehicle **102.** Also, the OBS **215** may interact with the OEM cloud **107** through the OAC **213** for performing the second level authentication.

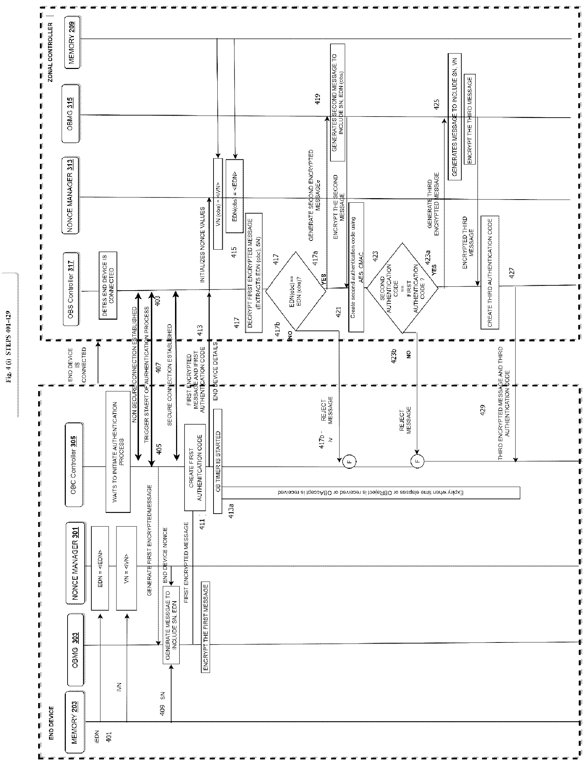

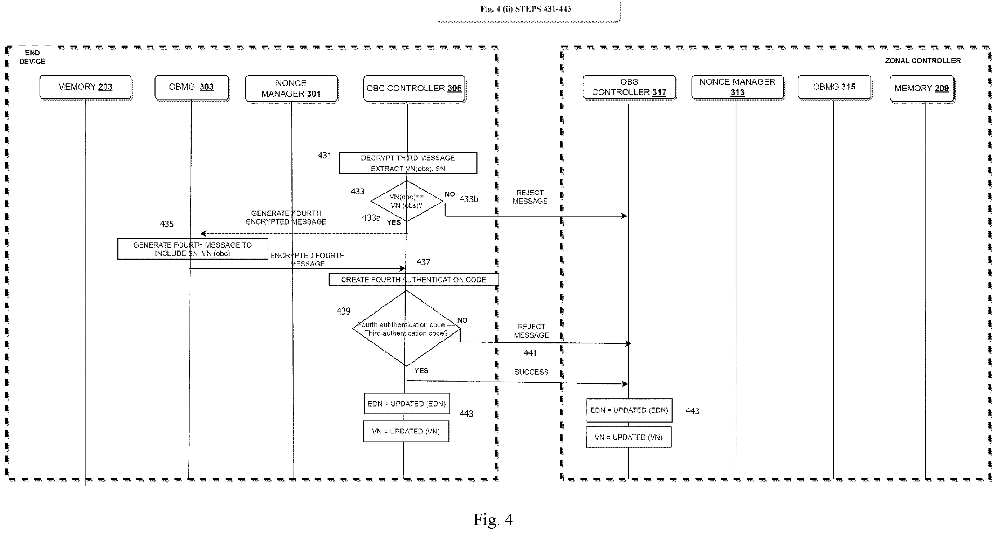

In one embodiment, the memory **217** may store data such as the iVN, the corresponding algorithm (Algor-OBNonce) and the secret key. Additionally, the memory **217** may also store the iEDN and a corresponding algorithm (Algo-EndDeviceNonce). The data is stored in the memory **217** of the vehicle **102** by the OEM during the production of the vehicle **102.** Further, the memory **217** may store vehicle details such as Vehicle Identifier Number (VIN), etc., In this embodiment, storing iEDN and iVN at both the memories 203, 217 of the end device 101 and vehicle 102, respectively, facilitates the mutual first level two way authentication by incorporating nonce comparison on both the end device 101 and vehicle 102. This ensures a more robust authentication mechanism. The first level two authentication may involve: (i) in a first way of authentication of end device 101 by the vehicle 102: receiving "first encrypted message" and "first authentication code" indicative of an "onboard request message" from the end device 101; (ii) in a sub-level of the first way of authentication by the vehicle 102: transmitting "second encrypted message" and "second authentication code" indicative of "on-board request verification message" to verify that the onboard request message from the end device 101 is authentic/valid; (iii) in a second way of authentication of vehicle 102 by the end device 101: receiving a "third encrypted message" and "a third authentication code" indicative of "on-board accept message" from the vehicle 102 (iv) in a sub-level of the second way of authentication by the end device 101: transmitting, to the vehicle 102, a "fourth encrypted message" that is "onboard accept verify message" indicative of verification of an on-board accept message. The mutual first level two-way authentication is explained in conjunction with FIG. 4.

In a non-limiting embodiment, the memory **203, 209, 217** may be an external memory chip or an inbuilt EEPROM memory, within the end device **101,** the zonal controller **103,** and the computing unit **105,** respectively. In an embodiment, the memory **203, 209, 217** may be a computer-readable medium known in the art including, for example, volatile memory, such as static random-access memory (SRAM) and dynamic random-access memory (DRAM), and/or synchronous dynamic random-access memory (SDRAM) and/or non-volatile memory, such as read only memory (ROM), erasable programmable ROM, flash memories, hard disks, optical disks, and magnetic tapes. In some embodiments, the memory **203, 209, 217** may be communicatively coupled to the corresponding the end device **101,** the zonal controller **103** or the computing unit **105** and may be configured to store various data processed by each of the end device **101,** the zonal controller **103,** or the computing unit **105.**

Further, the OBS **215** may trigger the SUC **219** for automatic software component checking and downloading after successful completion of third level authentication of the end device **101** by the OEM cloud **107** through the vehicle owner approval mechanism. In some embodiments, the SUC **219** may be configured to interact with the OEM cloud 107 for downloading the relevant software component related to the end device 101 to the vehicle **102.** Further, the SUC **219** may comprise but not limited to components such as Software Update Checker (SUChecker) **221** and an Upgrade Download Client **223.** The SUChecker **221** may be configured to receive the end device details and the vehicle details from the OBS **215** and provides the end device details and the vehicle details to the OEM cloud **107.** The SUChecker **221** may be configured to receive software availability status message comprising a Uniform Resource Indicator (URI) for downloading the software component from the OEM cloud **107** if the software component is available. Thereafter, the SUChecker **221** may be configured to transmit the URI to the UDC **223.** In case no software component is available, the SUChecker **221** may be configured to receive an error message from the OEM cloud **107** and may transmit the error message to the OBS **215** of the computing unit **105.**

In some embodiments, the UDC **223** may be configured to receive the URI from the SUChecker **221** and transmit the download request to the OEM cloud **107.** Additionally, the UDC **223** also downloads the software components from the UDC **223** and installs the software components on the computing unit **105** or the zonal controller **103.**

In an embodiment, the OEM cloud **107** may be a remote entity that takes care of the second level and the third level authentication of the end device **101** through the vehicle **102.** The OEM cloud **107** may comprise an OEM Authentication Server (OAS) **225,** OEM Software Component Repository (OSCR) **227,** and an OEM operation notifier **229.** In an embodiment, the OEM cloud **107** may be configured to authenticate the end device **101** with the vehicle **102** in the second level authentication. In another embodiment, the OEM cloud **107** confirms the onboarding of the end device **101** from the vehicle owner through a communication device **109** in the third level authentication. The communication device **109** may be any computing device, without limiting to, a personal computer, a laptop, or a smartphone, which can be configured to perform the method of present disclosure.

In an embodiment, the OAS **225** receives the end device details such as end device SN, part number, manufacturer details and the vehicle details (such as VIN) from the OBS **215** of the vehicle **102.** The received details are used to verify whether the end device **101** is authorized or authentic to connect to the vehicle **102.** The OAS **225** may comprise, but not limited to, an OAS verifier **231** and an OAS database **233.** In the second level authentication, OAS verifier **231** receives the end device details and the vehicle details from the OAC **213** of the vehicle **102.** The OAS verifier **231** may be configured to utilize the OAS database **233** for the end device **101** authentication by verifying whether the received end device details are present in the list of registered end devices or authorized by the OEM. Additionally, the OAS verifier **231** also checks whether the end device details match the vehicle details stored in the OAS database **233.** Upon finding the match in the OAS database **233,** the OAS verifier **231** may be configured to generate and provides an authentication success message or a authentication reject message to the OBS **215** via the OAC **213.**

In some embodiments, in the third level authentication, the OAS verifier **231** may be configured to transmit a One-Time Password (OTP)/URL to the communication device **109** using contact details (i.e., mobile number or email address) associated with the vehicle owner. In some embodiment, the contact details may be extracted using the vehicle details from the OAS database **233.** Thus, the OAS verifier **231** responds to the OBS **215,** based on the received response from the vehicle owner.

In some embodiments, the OAS database **233** may store authentic end device details such as end device serial number (SN), part number, manufacturer details etc., Further, the OAS database **233** may be also store vehicle details such as VIN. Additionally, the OAS database **233** may store contact details such as mobile number, email address, etc., of the vehicle owner mapped against corresponding vehicle details such as VIN etc.,

In some embodiments, the OSCR **227** may be used by the OEM to store all the software components or software packages for the computing unit 105 related to the authenticated end devices **101.** The OSCR **227** may comprise sub-components (not shown) such as software update server (SUS), Software Package check Module (SPCM), an update download server (UDS), and an artifactory. The SUS may be configured to receive the end device details and the vehicle details from the SUChecker **221** and forwards the end device details and the vehicle details to the SPCM. The SUS may also receive a software availability status message from the SPCM and provides the same to the SUChecker **221.** Additionally, the SUS may receive the download request along with URI from the UDC **223** and transmit download request along with URI to the UDS.

In some embodiment, the SPCM may receive the end device details and the vehicle details SUS and check within the Artifactory for the availability of the software packages or software components related to the end device **101.** The SPCM may receive the status message from the Artifactory about software availability along with the URI (in case of software availability) forwards the same to the SUS.

In some embodiments, the Artifactory may be a database where the end device details along with related software components or software packages for computing unit **105** may be stored. The Artifactory database comprises a mapping of the end device details and corresponding URI of available software packages. Further, the UDS may receive the download request along with URI from the SUS. The UDS may download the software component based on the received URI and forwards the URI to the UDC **223.**

In some embodiments, the OEM operation notifier **229** may be used to update algorithms which may be used to update the EDN value and VN value respectively on both the end device **101** and the vehicle **102.**

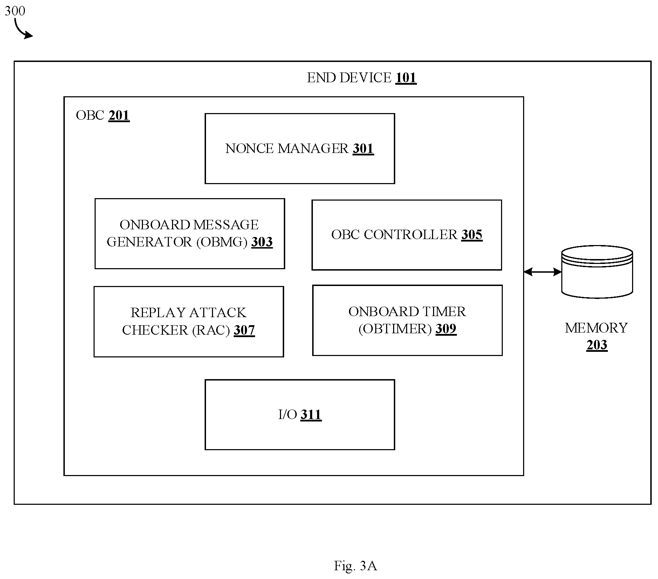

**Fig. 3A** shows a detailed diagram of an end device **101,** in accordance with an embodiment of the present disclosure. The OBC **201** may be coupled to the memory **203.** Further, the OBC **201** may comprise sub-components such as a nonce manager **301,** an Onboard message Generator (OBMG) **303,** an OBC controller **305,** a replay attack checker (RAC) **307,** an Onboard Timer (OBTIMER) **309,** and an I/O interface **311** such as a security framework interface.

The nonce manager **301** may be configured to initialize the EDN value stored in the memory **203** when the end device **101** may be connected to the vehicle **102** for first time. Similarly, the nonce manager **301** may be configured to initialize the VN value corresponding to the initial vehicle nonce value stored in the memory **203.** The nonce manager **301** may provide the EDN value and the VN value to the OBC controller **305.**

Further, the OBMG **303** may receive the EDN value and VN value from the nonce manager **301.** The OBMG **303** may also retrieve the end device SN and the secret key from the memory **203.** Further, OBMG **303** creates a message using the end device (SN) and the EDN value. The OBMG **303** may be configured to generate a first encrypted message using the secret key. The first encrypted message comprises the SN and the EDN value. Used herein, the term "Serial Number (SN)" may uniquely identify the end device 101 and prevent confusion during connection attempts with the vehicle 102. The incorporation of the SN in the first level authentication ensures that the correct end device 101 is connecting to the vehicle 102, when multiple other end devices try to establish connection with the vehicle 102 at the same time. Used herein, the term "first encrypted message" is indicative of an "onboard request message" from the end device 101 to the vehicle 102.

Subsequently, the OBMG **303** may generate a first authentication code using the first encrypted message, the secret key, and a crypto algorithm. The crypt algorithm may be any suitable encryption algorithm such as advanced encryption standard-cipher message (AES_CMAC). Used herein, the term "first authentication code" is associated with the on-board request message.

Thereafter, the OMBG **303** may be configured to transmit the first encrypted message and the first authentication code to the OBC controller **305** of the end device **101.** Further, the OBMG **303** may generate a fourth encrypted message comprising the extracted SN and the VN value. The OBMG **303** may generate the fourth encrypted message using the same secret key. Subsequently, the OBMG **303** may generate a fourth authentication code using the fourth encrypted message, the secret key, and the crypto algorithm. Thereafter, the OBMG **303** may transmit the fourth encrypted message and the third authentication code to the OBC controller **305** of the end device **101.** Used herein, the term "fourth encrypted message" is "onboard accept verify message" indicative of verification of an on-board accept message from the vehicle 102 by the end device 101.

Further, the OBC controller **305** may be configured to perform the functionality of the end device **101.** The OBC controller **305** is a main component of the OBC **201** which may configured to receive and store the iEDN value and VN value from the nonce manager **301.** Subsequently, the OBC controller **305** may be configured to receive the crypto algorithms from the memory **203** for updating the EDN and the VN on the memory **203.** In some embodiments, the OBC controller **305** may be configured to retrieve the secret key from the memory **203.** The OBC controller **305** may be configured to perform secure communication with the computing unit **105** of the vehicle **102** for performing the first level authentication between the end device **101** and the vehicle **102.**

The OBC controller **305** may be configured to receive a third encrypted message and a third authentication code from the OBS **215** when the end device **101** is successfully authenticated by the vehicle **102.** In other words, the OBC controller **305** may receive the third encrypted message and the third authentication code from the OBS **215** when the end device **101** is successfully authenticated by the vehicle **102,** an OEM cloud **107,** and the vehicle owner. The OBC controller **305** may be configured to extract the VN value and the SN from the third encrypted message using the secret key. The OBC controller **305** may be configured to generate a reject message indicating an authentication failure of the vehicle **102** if the extracted VN value does not match with the stored VN value. The OBC controller **305** may transmit the reject message to the OBS **215** of the vehicle **102.** In an embodiment, the OBC controller **305** may provide the extracted VN value to the RAC **307** of the OBC **201** of the end device **101.** Alternatively, the OBC controller **305** may be configured to successfully authenticate the vehicle **102** if the extracted VN value matches with the stored VN value. Subsequently, the OBC controller **305** may receive the fourth authentication code from the OBMG **303** of the OBC **201** and compares the fourth authentication code with the received third authentication code. If the fourth authentication code matches with the third authentication code, the OBC controller **305** may transmit an authentication message to the OBS **215** indicating the successful authentication of the vehicle **102** by the end device **101.** However, if the fourth authentication code does not match with the third authentication code, the OBC controller **305** may transmit the reject message to the OBS **215** indicating the authentication failure of the vehicle **102.** In Similar manner, the OBC controller **305** may receive reject message or authentication message from the OBS **215** indicating authentication failure or authentication success of the end device **101** by the vehicle **102.**

In some embodiments, the OBC controller **305** may be configured to receive the reject message from the OBS **215** in the second level authentication failure from the OEM cloud **107.** Also, the OBC controller **305** may receive the final authentication confirmation or reject message from the OBS **215** in the third level authentication success or failure respectively. Lastly, the OBC controller **305** may receive an error message from the OBS **215** in case no software component is available for the vehicle **102.**

In some embodiments, the RAC **307** may be configured to receive and store the extracted VN value from the OBC controller **305.** Thereafter, the RAC **307** may confirm the VN value by comparing the currently received VN with the previously stores VN value(s). If a mismatch is found between the currently received VN and the previously stored VN, a replay attack is confirmed. The RAC **307** may communicate the replay attack to the OBC controller **305.**

As used herein, the term OBC **201,** nonce manager **301,** OBMG **303,** OBC controller **305,** a replay attack checker **307,** an OBTIMER **309,** may refer to an Application Specific Integrated Circuit (ASIC), an electronic circuit, a hardware processor (shared, dedicated, or group) and memory that execute one or more software or firmware programs, a combinational logic circuit, and/or other suitable components that provide the described functionality. In some embodiments, OBC controller **305** may be configured to perform one or more functions of the vehicle **102** for performing onboarding of the end device **101** by performing multi-level authentication. However, the OBC **201** may comprise additional components which may be required to perform the desired functionality in accordance with the present disclosure.

In some embodiments, the OBTIMER **309** may be referred to as a timer which gets triggered as soon as the first encrypted message and the first authentication code is transmitted by the OBC controller **305** to the OBS **215.** The OBTIMER **309** then waits for a specific time for receiving a response (either authentication success message or reject message) from the OBS **215** before it expires. Thus, the OBTIMER **309** helps in preventing stale messages and further enhances security by reducing the opportunity of replay attacks.

In some embodiments, the I/O interface **311** may comprise but not limited to security framework interface. The security framework interface **311** may be configured to provide access to cryptography algorithm and secure connection mechanisms available on the end device **101** to establish a secure connection between the OBC controller **305** of the end device **101** and the OBS **215** of the vehicle **102.** In an embodiments, the I/O interface **311** may include a variety of software and hardware interfaces, for example, a web interface, a graphical user interface, an input device, an output device, and the like for interacting with a user of the end device **101.**

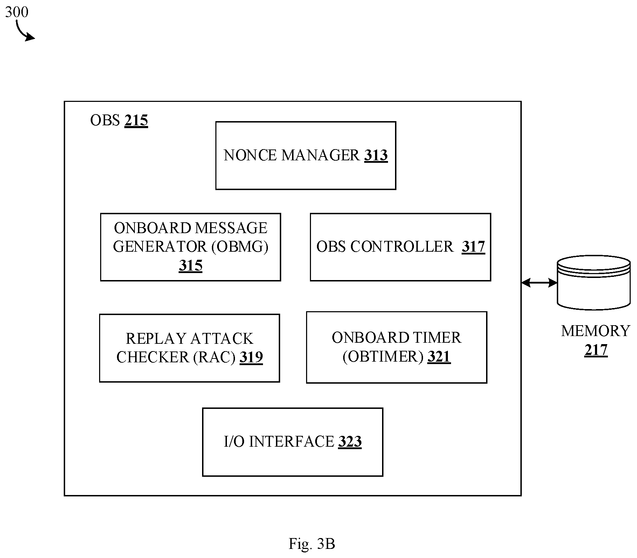

**Fig. 3B** shows an exemplary architecture of the Onboard Server (OBS) **215** of the vehicle **102,** in accordance with an embodiment of the present disclosure. In an embodiment, the OBS **215** may be coupled to the memory **217.** In some embodiments, similar to the OBC **201,** the OBS **215** may comprise sub-components such as a Nonce Manager **313,** an Onboard message generator **315,** replay attack checker **319,** onboard timer (OBTIMER) **321,** and an I/O interface **323.** The nonce manager **313** may initialize the VN value corresponding to the initial vehicle nonce (iVN) value stored in the memory **217** of the computing unit **105** when the first encrypted message is received from the end device **101** which is connected to the vehicle **102** for the first time. Similarly, the nonce manager **313** initializes the EDN corresponding to the iEDN value stores in the memory **217** of the computing unit **105.** Further, the nonce manger **313** provides the VN value and the EDN value to the OBMG **315** and the OBS controller **317.**

In some embodiments, the OBMG **315** receives the VN value and the EDN value from the nonce manager **313.** The OBMG **315** may be configured to retrieve the secret key from the memory **217** of the computing unit **105.** Further, the OBMG **315** may receive the end device SN from the OBS **215** which is extracted from the received first encrypted message. OBMG **315** may create a second encrypted message using the SN and the EDN using the secret key. Subsequently, the OBMG **315** generates a second authentication code using the second encrypted message, the secret key, and the crypto algorithm. The OBMG **315** may provide the second encrypted message and the second authentication code to the OBS controller **317** of the computing unit **105.** Used herein, the term "second encrypted message" is "on-board request verification message" indicative of verification of the onboard request message by the vehicle 102. Further, the OBMG **315** may generate a third encrypted message and a third authentication code. The third encrypted message comprises the extracted SN of the at least one end device **101** and the VN value of the vehicle **102.** The OBMG **315** may transmit the third encrypted message and the third authentication code to the OBC controller **305** for further authentication. Used herein, the term "third encrypted message" is "on-board accept message" indicative of acceptance of the onboard request message by the vehicle 102.

In some embodiments, the OBS controller **317** may be a main sub-component of the OBS **215.** The OBS controller **317** may be configured to perform the functionality of the computing unit **105** in some aspect of the present disclosure. The OBS controller **317** may be configured to receive the algorithms from the memory **217** of the computing unit **105** for updating the EDN value and the VN value. The OBS controller **317** may be configured to maintain the updated EDN value and the VN value on the memory **217** of the computing unit **105.** Moreover, the OBS controller **317** may be configured to retrieve the secret key from the memory **217** of the computing unit **105.** Further, the OBS controller **317** may be configured to perform secure communication with the end device **101** for performing the first level two-way authentication. The OBS controller **317** receives the first encrypted message and first authentication code from the OBC controller **305** when the end device **101** is connected with the vehicle **102.** The OBS controller **317** may be configured to extract the EDN value and the SN from the first encrypted message using the secret key. The OBS controller **317** may be configured to generate a reject message indicating the authentication failure to the OBC controller **305** if the extracted EDN value does not match with the stored EDN value. Further, the OBS controller **317** may provide the extracted EDN value to the RAC **319** of the OBS **215** of the computing unit **105.** Alternatively, if the extracted EDN value matches with the stored EDN value, the OBS controller **317** may provide authentication success message to the OBC **201** indicating authentication of the end device **101** by the vehicle **102.**

In another embodiment, the OBS controller **317** may be configured to receive the fourth authentication code from the OBMG **315** of the OBS **215** and compares the received third authentication code. If the fourth authentication code does not match with the third authentication code, the OBS controller **317** may transmit the reject message indicating authentication failure of the end device **101** by the vehicle **102.** Alternatively, if the fourth authentication code matches with the third authentication code, the OBS controller **317** may transmit an authentication success message to the OBC **201** indicating successful authentication of the end device **101** by the vehicle **102.**

For performing the second level authentication, the OBS controller **317** may be configured to receive the end device details in the success message and transmit the end device details to the OAS verifier **231** of the OEM authentication server **225** of the OEM cloud **107.** In another embodiment, the OBS controller **317** may be configured to receive the end device details along with the first encrypted message and the first authentication code. The OBS controller **317** may be configured to retrieve the vehicles details such VIN from the memory **217** of the computing unit **105.** Thereafter, the OBS controller **317** may be configured to transmit the vehicle details along with the end device details through the OAC **213.** In some embodiments, the OBS controller **317** may be configured to receive the authentication success message or reject message from the OAS verifier **231** of the OAS **225** of the OEM cloud **107.** Accordingly, the OBS controller **317** may transmit the authentication success message or reject message to the OBC controller **305** of the end device **101.**

Further, for performing the third level authentication, the OBS controller **317** may be configured to receive a final authentication success message or reject message from the OAS verifier **231.** The OBS controller **317** may be configured to transmit the authentication success message or the reject message to the OBC controller **305.** Upon receiving the final authentication success message, the OBS controller **317** may transmit the end device details and vehicle details to the SUChecker **221.** In another embodiment, the OBS controller **317** may be configured to transmit the end device details the vehicle details to the SUChecker **221** based on the authentication success message from the end device **101.** Lastly, the OBS controller **317** may be configured to transmit an error message from the SUChecker **221** if no software component is available for the end device **101** of the vehicle **102.**

In some embodiments, the RAC **319** of the computing unit **105** may be configured to receive and store the extracted EDN value from the OBS controller **317.** Further, the RAC **319** may be configured to check the freshness of the EDN value by comparing the currently received EDN with the previously stored EDN value. If the currently received EDN value does not match with the previously EDN value, the RAC **319** confirms the replay attack and communicates the replay attack to the OBS controller **317.**

In some embodiments, the OBTIMER **321** may be referred to as a timer which gets triggered as soon as the third encrypted message and the third authentication code is transmitted by the OBS controller **317** to the OBC controller **305.** The OBTIMER **321** waits for a specific time to receive a response from the OBC controller **305** before the timer expires. Thus, this helps in preventing the processing of stale messages and further enhances security by reducing the opportunity of replay attacks.

In some embodiments, the I/O interface **323** may comprise, but not limited to, a security framework interface which may be configured to provide access to cryptography algorithm and secure connection mechanism available on the computing unit **105** of the vehicle **102** to establish a secure connection between the OBC controller **305** of the end device **101** and the OBS controller **317** of the vehicle **102.** In an embodiments, the I/O interface **323** may include a variety of software and hardware interfaces, for example, a web interface, a graphical user interface, an input device, an output device, and the like for interacting with a user of the computing device **105.**

**Fig. 4** illustrates a sequence diagram for performing a first level two-way authentication for performing onboarding of end device **101** of vehicle **102,** for implementing embodiments consistent with the present disclosure. The two-way authentication is termed because the authentication is performed between the at least one end device **101** and the computing unit **105** of the vehicle **102.** In other words, in one embodiment, the at least one end device **101** authenticates the vehicle **102.** The at least one end device **101** may authenticate the vehicle **102** using OBS **215** of the computing unit **105.** In another embodiment, the vehicle **102** authenticates the at least end device **101.** In some embodiments, the vehicle **102** may authenticate the at least one end device **101** using the OBC **201** of the at least one end device **101.** Thus, the first level two-way authentication ensures that there is no external attack and both the at least one end device **101** and the vehicle **102** are valid. In one embodiment, an initial connection may be established between the at least one end device **101** and the vehicle **102** via a wired medium such as an Automotive Ethernet, Controller Area Network (CAN), Universal Serial Bus (USB), Serial Peripheral Interface (SPI), etc., In an alternative embodiment, the initial connection may be established between the at least one end device **101** and the vehicle **102** via a wireless medium such as Wi-Fi, Bluetooth, etc., In some embodiments, the initial connection may be either a secured connection or a non-secured connection. In some embodiments, the OBC **201** of the at least one end device **101** may communicate with the OBS **215** of the computing for the first level two-way authentication after establishing a secure connection. The secured connection may be established over the above listed wired medium or wireless medium.

Initially, an Original Equipment Manufacturer (OEM) may write an initial EndDeviceNonce (iEDN) value, a secret key, and a corresponding algorithm (Algo-EDN) on the computing unit **105** of the vehicle **102** during the production of the at least one end device **101.** Subsequently, the OEM may share the EDN value, the secret key and the corresponding algorithm (Algor-EDN) with the end device manufacturer. In a similar manner, the OEM may write an initial VehicleNonce (iVN) value and a corresponding algorithm (Algo-VN) on the computing unit **105** of the vehicle **102** during the production of ht vehicle **102.** Subsequently, the OEM may share the iVN and the Algo_VN with the end device manufacturer. The end device manufacturer may write a globally unique end device serial number (SN) and all of the received values from the OEM to the end device **101.** It may be worth noting that the secret key may remain same for both the end device **101** and the vehicle **102.**

At step **401,** on first time connection of the at least one end device **101** with the vehicle **102,** a nonce manager **301** of the OBC **201** of the at least one end device **101** may initialize EDN to the iEDN value and VN value to the initial VN. At step **403,** based on the end device **101** connection with the vehicle **102,** an OBC controller **305** of the OBS **215** of the computing unit **105** of the vehicle **102** may generate a trigger to the end device **101** to start the authentication process. Further, at step **405,** the OBC controller **305** of the OBC **201** may receive the trigger to start the authentication process from the OBS controller **317** on available initial connection. The initial connection may be a non-secure connection since there are no confidential details.

At step **407,** the authentication process starts with the OBC controller **305** establishing a secure connection with the OBS controller **317** via the I/O interface **311** such as the security framework interface available on both the at least one end device **101** and the vehicle **102.** Thereafter, at step **409,** an Onboard Message Generator (OBMG) **303** of the OBC **201** may generate a first encrypted message comprising a serial number of the at least one end device **101.** In an embodiment, the first encrypted message may be encrypted using the first secret key. Subsequently, at step **411,** the OBMG **303** of the OBC **201** generates a first authentication code corresponding to the first encrypted message using the first secret key. In an embodiment, the first authentication code may generated using a crypto-algorithm such as advanced encryption standard-cipher message authentication code (AES_CMAC). However, any suitable crypto-algorithm may be used for generating the authentication code.

Thereafter, as shown in step **413,** the OBC controller **305** may be configured to transmit the first encrypted message and the first authentication code to the OBS controller **317.** As soon as the first encrypted message and first authentication code are transmitted, an OBTIMER **309** may be configured to start a timer as shown in step **413a.** The timer may be used to wait for an authentication success message (also referred to as authentication message or success message) or a reject message (also referred to as authentication failure message) from the OBS controller **317.** If the timer is expired before receiving the authentication success message or the reject message, the authentication process is stopped, and the flow continues to step 23. In an alternative embodiment, if the reject message corresponding to step 10b and step 13b or the authentication success message corresponding to step 17 is received from the OBS controller **317,** then the timer is stopped.

Further, upon receiving the first encrypted message and the first authentication code, at step **415,** a nonce manager **313** of the OBS **215** initializes VN to the initial VN value and EDN to the initial EDN value written in the memory **217** of the vehicle **102** during the production of the vehicle **102.** In some embodiments, two or more instances may be stored in a table form on the memory **217** and may be maintained by the OBS controller **317** when two or more end devices are getting authenticated on the vehicle **102** parallelly. The table will have one row corresponding to the one end device **101** with EDN value, VN value, SN, etc., Thereafter, the OBS controller **317** may decrypt the received first encrypted message using the secret key to extract EDN value and SN. At step **417,** the OBS controller **317** may compare the values of the extracted EDN with the initialized END value received from the nonce manager **313** of the OBS. **215** As shown in step **417a,** if both the values are matched, then the authentication process will continue to next step **419.** However, if the values do not match as shown in step **417b,** the OBS controller **317** may transmit the reject message indicating that the authentication failure of the at least one end device **101.** The OBS controller **317** may transmit the reject message to OBC controller **305.** Subsequently, a replay attack checker **319** of the OBS **215** compares the extracted EDN value with previously extracted EDN value(s). If there is a match, then the RAC **319** may confirm a replay attack to the OBS controller **317.** For such replay attacks, the computing unit **105** may not entertain any further connection requests from the at least end device **101** in future. In an embodiment, the computing unit **105** may share the end device details with the OAS **225** of the OEM cloud **107** to take preventive or prohibitive actions. In case there is no match found between the extracted EDN value with the previously extracted EDN value (s), then no action may be taken by the OBS controller **317,** and the authentication may stop, and the process flow continues to step 443.

At step **419,** the OBMG **315** of the OBS **215** may generate a second encrypted message and a second authentication code using the extracted SN and the iEDN. The OBMG **315** may generate the second encrypted message using the second secret key. Further, as shown in step **421,** the OBMG **315** may generate a second authentication code corresponding to the second encrypted message using the crypto-algorithm such as the advanced encryption standard-cipher message authentication code (AES_CMAC). Furthermore, as shown in step **423,** OBS controller **317** may compare the generated second authentication code with the first authentication code. If the second authentication code matches with the first authentication code, the authentication for the at least end device **101** by the vehicle **102** is completed as shown in step **423a,** and process may continue to next step 14. The OBS controller **317** may transmit an authentication success message to the OBS controller **317** indicating successful authentication of the at least one end device 101. However, if the second authentication code does not match with the first authentication code, the OBS controller **317** may transmit the reject message to the OBC controller **305** as shown in step **423b** and the authentication process stops, and the process flow continues to step **443.**

Next, at step **425,** a third encrypted message is generated by the OBMG **315** of the OBS controller **317** using the extracted SN and iVN. The OBMG **315** may generate the third encrypted message using the second secret key. Subsequently, at step **427,** the OBMG **315** may generate a third authentication code corresponding to the third encrypted message using the crypto algorithm such as AES_CMAC. As shown in step **429,** the OBS controller **317** may transmit the third encrypted message and the third authentication code to the OBC controller **305.** An OBTIMER **321** of the OBS **215** may start a timer (such as second timer) once the third encrypted message and the third authentication code are transmitted to the at least one end device **101.** The timer may be used to wait for an authentication success message or a reject message from the OBC controller **305.** If the timer is expired before receiving the authentication success message or the reject message, then the authentication process may stop and the process flow may continue to step **443.** Further, the timer may be stopped when the reject message is received corresponding to step 433b or the authentication success message is received by the OBS controller **317.**

Upon receiving the third encrypted message and the third authentication code, at step **431,** the OBC controller **305** decrypts the third encrypted message and third authentication code using the first secret key to extract the VN value and the SN. Further, at step **433,** the OBC controller **305** may compare the values of the extracted VN value with the iVN value received from the nonce manager **301** of the OBC **201.** As shown in step **433a,** if the VN value matches with the iVN value, then the authentication process may continue to next step **435.** On the contrary, if the VN value does not match with the iVN value as shown **433b,** then the OBC controller **305** may transmit the reject message to the OBS controller **317** indicating the authentication failure of the vehicle **102.** Subsequently, the RAC **307** of the OBC **201** may compare the extracted VN value with previously extracted VN value(s). If a match is found, then the OBC **201** may not take any further action and the authentication process may stop and process flow may continue to step **443.** On the other hand, if a match is found between the extracted VN value and the previously extracted VN value(s), then a replay attack may be confirmed. In case of such replay attacks, the at least one end device **101** may log off and close the connection.

At next step **435,** the OBMG **303** of the OBC **201** may generate a fourth encrypted message using the SN and the iVN value using the first secret key. Subsequently, at step **437,** the OBMG **303** of the OBC **201** may generate a fourth authentication code corresponding to the fourth encrypted message using the crypto-Algorithm such as the advanced encryption standard-cipher message authentication code. Further, as shown in step **439,** the OBC controller **305** may compare the fourth authentication code with the fourth encrypted message. If the fourth authentication code matches with the third authentication code, the authentication for the vehicle **102** is successfully completed and the process may continue to transmit the authentication success message to the OBS controller **317.** The OBC controller **305** may transmit the authentication success message comprising the SN, part number, manufacturer details stored within the memory **203** of the at least one end device **101,** to the OBS controller **317.** However, as shown in step **441,** if the fourth authentication code does not match with the third authentication code, then the OBC controller **305** may transmit a reject message to the OBS controller **317.** The reject message may indicate authentication failure for the vehicle **102.** The authentication process may be stopped, and the process may continue to step **443.**

In some embodiments, the EDN value and VN value may be updated on both of the at least one end device **101** and the vehicle **102,** using the respective crypto algorithm. The updated EDN and previous values of the EDN and the VN may be stored in the table in the memory **217** (as mentioned in step 8) and maintained by the OBS controller **317.** Similarly, the updated and the previous values of the EDN and VN may be stored on the at least one end device **101** and maintained by the OBC controller **305.**

Optionally, the two algorithms (Algo-EDN and algo-VN) may be updated in both the at least one end device **101** and a memory of the OEM operation notifier **229** of the OEM cloud **107** based on the requirement. During the second or subsequent connection of the at least one end device **101** with the vehicle **102,** both the OBC **201** and the OBS **215** may retain the last updated EDN value, the VN value, and the corresponding algorithms in both of the memory **203** and the memory **217.** Also, the EDN value the VN value are persistent which may be retained if the at least one end device **101** and the vehicle **102** are powered-off. In an embodiment, in case of hard reset of the at least one end device **101,** the last updated EDN value and algorithm may be retained in the memory **203** and the memory **217.** In a non-limiting embodiment, the OBS **215** may maintain the EDN values for each of the multiple end devices **101** in a table form in the memory **217.**

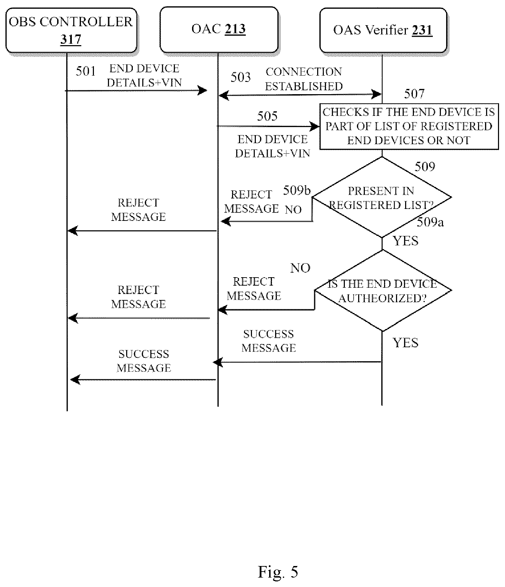

**Fig. 5** illustrates a sequence diagram for performing a second level authentication between the vehicle **102,** and the OEM cloud **107,** in accordance with an embodiment of the present disclosure. Once the first-level two-way authentication is completed, the second level authentication of the at least one end device **101** may be performed by the vehicle **102** along with the OEM cloud **107.** The second level authentication may ensure that the at least one end device **101** is registered with the OEM cloud **107.** In other words, the second level authentication may ensure that the at least one end device **101** attempting to connect with the vehicle **102** is not an unregistered end device **101.**

To perform the second level authentication, the OBS controller **317** may receive all the end device details in the authentication message. The OBS controller **317** may transmit the received end device details to an OEM Authentication Server (OAS) **225** of the OEM cloud **107** through an OEM Authentication Client (OAC) **213** residing within the computing unit **105** for whether the at least one end device **101** is authenticated by the OEM. If the at least one end device **101** is authenticated by the OEM, the OBS controller **317** may be notified by the OEM cloud **107.** The OBS controller **317** may wait for a third level authentication to complete in order to trigger automatic software component download or installation on the computing unit **105** or the zonal controller **103** or both.

In some embodiments, following the first level two-way authentication process, the OBS **215** of the computing unit **105** may trigger the second level authentication as part of multi-level authentication process. In some embodiments, the OBS controller **317** may extract the at least one end device details i.e., SN, part number, manufacturer details, etc., from the received authentication message. As shown at step **501,** the OBS controller **317** may transmit the extracted end device details along with the vehicle details such as VIN stored within the computing unit **105** to the OAC **213.**

Thereafter, as shown in step **503,** the OAC **213** establishes a secure communication channel with the OAS **225** of the OEM cloud **107** facilitates by an External Connectivity Component **211** of the vehicle **102.** Further, as shown in step **505,** the OAC **213** may transmit the end device details and the vehicle details to an OEM Authentication Server verifier (OAS verifier) **231** of the OAS **225** of the OEM cloud **107** over the secure communication channel. The OAS verifier **231** may receive the end device details and the vehicle details form the OAC **213** of the computing unit **105.** Furthermore, as shown in step **507,** the OAS verifier **231** may check in an OAS database **233** of the OAS **225** which may store a list of registered end devices and the registered vehicles **102.** In other words, the list of registered end devices may be in an OEM database (i.e., the OAS database **233)** of the OEM cloud If there is a match of the end device **101** in the OAS database **233,** then as shown in step **509,** the OAS verifier **231** checks for the received vehicle details in the OAS database **233** to determine if the at least one end device **101** is authorized (i.e., compatible) or not for the vehicle **102** as shown in step **509a.** If the end device **101** is authorized to get installed on the vehicle **102,** the OAS verifier **231** may respond to the OBS Controller **317** through the OAC **213** with an authentication success message and the second level authentication may be completed.

Thereafter, the OBS controller **317** may wait for the third level authentication process to complete. In an alternative embodiment, if the end device **101** may not be authorized to install on the vehicle **102,** the OAS verifier **231** may respond to the OBS controller **317** through the OAC **213** with a reject message. The OBS controller **317** may communicate the reject message to the OBC controller **305.** The OBC controller **305** may log off and stop the connection between the at least one end device **101** and the vehicle **102.** In some embodiments, the OAS verifier **231** may notify the reject message to the vehicle owner using the contact details such as a mobile phone or email address of the vehicle owner via the communication device **109.** The contact details may be extracted from the OAS database **233** using the vehicle details such as the VIN.

In case there is no match of the end device details as shown in step **509b,** the authentication may be stopped, and following steps may be executed. The OAS verifier **231** may respond to the OBS Controller **317** through the OAC **213** with a reject message. The OBS controller **317** may communicate the reject message to the OBC controller **305.** Thereafter, the OBC controller **305** may log off and the connection between the at least one end device **101** and the vehicle **102** may be stopped. Optionally, the OAS Verifier **231** may notify the reject message to the vehicle owner using contact details (i.e., mobile phone or email address) of the vehicle owner via the communication device **109.** In some embodiments, the contact details may be extracted from the OAS database **233** using the vehicle details such as the VIN.

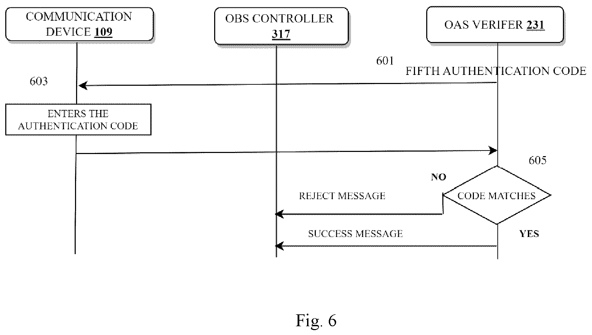

**Fig. 6** illustrates a sequence diagram for performing a third level authentication between the vehicle owner via a communication device **109** and the OEM cloud **107,** in accordance with an embodiment of the present disclosure. The third level authentication may be performed by the OEM cloud **107** with the vehicle owner in order to make sure that proper installation of the at least one end device **101** on the authenticated or authorized vehicle **102** may be performed.

Following the second level authentication process, the OAS **225** of the OEM cloud **107** proceeds to trigger the third level authentication as part of multi-level authentication process. The third level authentication may be performed by the OAS verifier **231.** As shown in step **601,** the OAS verifier **231** may transmit a fifth authentication code such as a One-Time Password (OTP) to contact details via the communication device **109** associated with the vehicle owner. The contact details may comprise, but are not limited to, a mobile phone or an email address which may be extracted using the vehicle details (VIN) in the OAS database **233.**

In an alternative embodiment, the OAS verifier **231** may share a URL (preferably of the OEM cloud **107)** to the communication device **109** of the vehicle owner, to receive the vehicle owner response. Further, as shown in step **603,** the vehicle owner may enter the received fifth authentication code in the communication device **109** in OEM specific mobile application or OEM web-portal which may be connected to the OEM cloud **107.**

In the alternative embodiment, the vehicle owner may click on the received URL to share the acceptance. Thereafter, as shown in step **605,** the OAS verifier **231** may check for the vehicle owner response from the received OTP or accepted URL. If the received OTP or the accepted URL matches with the transmitted fifth authentication code, then the authentication may be completed. The OAS verifier **231** may respond to the OBS controller **317** through the OAC **213** with an authentication success message. Subsequently, the OBS controller **317** may transmit the authentication success message to the OBC controller **305.** However, if the received OTP does not match with the fifth authentication code or the URL is not accepted by the vehicle owner, then the OAS verifier **231** may notify the OBS controller **317** through the OAC **213** with a reject message.

In another embodiment, the OAS verifier **231** may re-attempt performing the transmission of the fifth authentication code, before transmitting or notifying the reject message to the OBS controller **317.** Upon receiving the reject message, the OBS controller **317** may transmit the reject message to the OBC controller **305** and close the connection with the OBC controller **305.**

Post completion of successful multi-level authentication, the OBS controller **317** may check with the OEM cloud for available software components or packages for the computing unit or the zonal controller or both, related to the at least one end device. Based on positive response from the OEM cloud, the software components may be installed on the computing unit or the zonal controller or both. In an embodiment, during the automatic download of software components, any existing method of authentication of software components and the configuration details (using configuration filed) of those components may be used (like MD5 checksum of the software components or token-based generation and validation).

In some embodiments, once the OBS controller **317** may receive the authentication success message from the OAS verifier, the OBS controller **317** may send a request message along with the end device details and the vehicle details to SUChecker of SUC configured within the computing unit of the vehicle. Further, the SUChecker may transmit the end device details and the vehicle details (on any available connection or newly created connection) with SUS of OSCR of the OEM cloud. Thereafter, the SUS may transmit the received end device details and the vehicle details to determine within Artifactory of the OSCR for availability of software components related to the end device. The Artifactory responds to the SPCM with a status message including the status of availability of the software components. In case of availability of the software components, the status message may also include a Uniform Resource Indicator (URI) for downloading or installing the software component.

Further, the SPCM may transmit the received status message with the SUS and the SUS may respond to the SUChecker with the status message. Thereafter, the SUChecker may determine if the software component is available based on the received status message. Upon determining that the software component is available, then the SUChecker may extract the URI from the received status message. Alternatively, upon determining that the software component is not available, the SUChecker may transmit an error message to the OBS controller. **317** The OBS controller **317** may forward the error message to the OBS controller **317** and the connection of the at least one end device with the vehicle may be stopped or disconnected.

In some embodiments, for software update installation, the SUChecker may transmit the extracted URI to UDC of the SUC. The UDC may transmit a download request along with URI to the SUS. Thereafter, the SUS may trigger Update Download Server (UDS) by passing the received download request along with the URI. The UDS uses the URI to download the software component and forwards the URI to the UDC. Finally, the UDC may install the downloaded software components on the computing unit of the vehicle. In an alternative embodiment, the UDC of the SUC may install downloaded software packages on the zonal controller of the vehicle or on both the computing unit as well as the zonal controller, using a standard method available for software installation. In another embodiment, if the SUChecker may not be used in the SUC, then the above mentioned SUChecker steps may be executed by the UDC of the SUC.

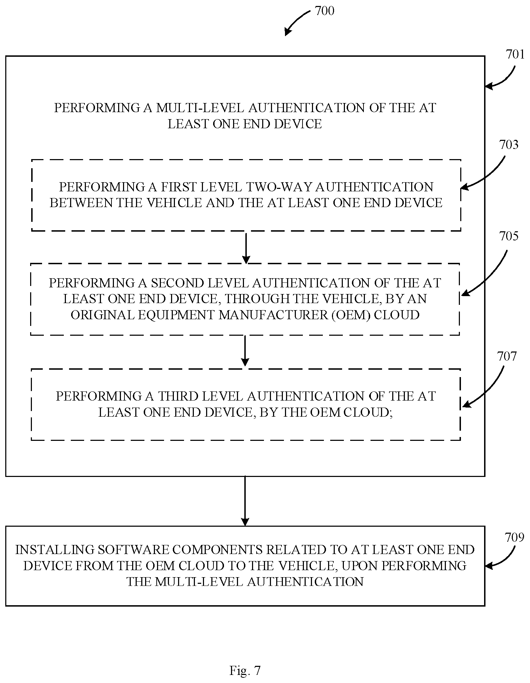

**Fig. 7** depicts a method **700** of performing onboarding of at least one end device **101** of a vehicle **102,** in accordance with an embodiment of the present disclosure. The method **700** may be described in the general context of computer executable instructions. Generally, computer executable instructions may include routines, programs, objects, components, data structures, procedures, modules, and functions, which perform specific functions or implement specific abstract data types.

The order in which the method **700** is described is not intended to be construed as a limitation, and any number of the described method blocks may be combined in any order to implement the method. Additionally, individual blocks may be deleted from the methods without departing from the scope of the subject matter described. Further, it may be noted that the method **700** may be performed by end device **101,** a computing unit **105,** an OEM cloud **107** or communication device **109** sub-components of the end device **101,** the computing unit **105,** the OEM cloud **107,** as shown in **Figs 2-4****.** The description of **Fig. 7** is provided with reference to Figs. **2-4****.**

At block **701,** the method **700** comprises performing a multi-level authentication of the at least one end device **101.** The method **700** at block **701** may be performed by the end device **101** or the computing unit **105.** In some embodiments, the method **700** at block **701** may be performed either by OBC controller **305** or the OBS controller **317.** The method **700** may perform the multi-level authentication by performing a first level two-way authentication between the vehicle **102** and the at least one end device **101** as indicated in step **703.** The method **700** at step **703** may be performed either by OBC controller **305** or the OBS controller **317.**

In some embodiments, the first level two-way authentication between the vehicle **102** and the at least one end device **101** may be performed based on nonce values. The nonce values may be configurable and mutually agreed between the end device **101** and the vehicle **102.** In some embodiments, the nonce values may be configured by the OEM during the production of the vehicle **102** and the at least end device **101.** In some embodiments, the method may perform first level two-way authentication by exchanging encrypted messages between the at least one end device **101** and the vehicle **102.** In some embodiments, the encrypted messages may comprise EndDeviceNonce (EDN) value and VehicleNonce (VN) value that are stored in both the at least one end device **101** and the vehicle **102.**

In some embodiments, for performing the first level-two way authentication of the at least one end device **101,** the method may comprise performing a first way of authenticating the at least one end device **101** by the computing unit **105** of the vehicle **102** and performing a second way of authenticating the vehicle **102** by the at least one end device **101.** The first way of authenticating the at least one end device **101** by the computing unit **105** may comprise receiving a receiving a first encrypted message and a first authentication code corresponding to the encrypted message from the at least one end device **101.** The first encrypted message may be encrypted by at the at least one end device **101** using a first secret key stored in the at least one end device **101.** Further, the method may extract the SN and the EDN value of the at least one end device **101** by decrypting the received first encrypted message using a second secret key stored in the computing unit **105** of the vehicle **102.** The first secret key and the second secret key may be same key.

Further, the method comprises determining whether the extracted EDN value matches with a EDN value stored in the computing unit **105.** If the extracted EDN value does not match with the EDN value stored in the computing unit **105,** the method may comprise transmitting a reject message to the at least one end device **101** indicating authentication failure of the at least one end device **101** by the vehicle **102.** However, if the extracted EDN value matches with the EDN value stored in the computing unit **105,** the method may comprise performing a sub-level authentication using the extracted EDN value and the EDN value stored in the computing unit **105.**

Further, for performing the sub-level authentication, the method may comprise generating a second encrypted message and a second authentication code corresponding to the second encrypted message. The second encrypted message may comprise the extracted SN and the EDN value stored in the computing unit 105 of the vehicle 102. Thereafter, the method may comprise determining whether the second authentication code matches with the received first authentication code. Further, the method may comprise authenticating the at least one end device **101** if the second authentication code matches with the first authentication code. Finally, the method may comprise transmitting the reject message indicating the authentication failure of the at least one end device **101** if the second authentication code does not match with the received first authentication code.

After successful authentication of the at least one end device **101** by the vehicle **102,** the at least end device **101** perform vehicle authentication by performing the second way of authentication. For performing the second way of authenticating the vehicle **102,** the method may comprise receiving a third encrypted message and a third authentication code. The third encrypted message may comprise the extracted SN of the at least one end device **101** and the VN value of the vehicle **102.** The method may further comprise determining whether the extracted VN value matches with a VN value stored in the at least one end device **101.** If the extracted VN value does not match with the VN value stored in the at least one end device **101,** the method may comprise transmitting a reject message indicating authentication failure of the vehicle **102.** Alternatively, If the extracted VN value matches with the VN value stored in the at least one end device **101,** the method may comprise performing a sub-level authentication with the extracted VN value and the VN value stored in the at least end device **101.**

For performing the sub-level authentication by the at least one end device, the method comprises generating a fourth encrypted message and a fourth authentication code corresponding to the fourth encrypted message. The fourth encrypted message may comprise the extracted SN and the VN value stored in the at least one end device **101.** Thereafter, the method may comprise determining whether the fourth authentication code matches with the third authentication code. Upon determining that the fourth authentication does not match with the third authentication code, the method may comprise transmitting the reject message indicating the authentication failure of the vehicle **102.** Whereas, upon determining that the fourth authentication matches with the third authentication code, the method may comprise authenticating the vehicle **102** by the at least one end device **101.**

After, post successful first level two-way authentication between the at least one end device **101** and the vehicle **102,** the method may comprise updating the EDN value and the VN value based on configurable technique. Subsequently, the method may initiate another first level two-way authentication between the at least one end device **101** and the vehicle **102,** based on the updated EDN value and the updated VN value. The method may be performed for reconnecting the vehicle **102** in case the at least one end device **101** is disconnected with the vehicle **102.**

Thereafter, for performing the multi-level authentication, the method **700** comprises performing a second level authentication of the at least one end device **101,** through the vehicle **102,** by the OEM cloud **107** as mentioned in step **705.** In some embodiments, the method **700** at step 705 may be performed by the OEM authentication server (OAS) **225.** In some embodiments, for performing the second level authentication, the method may comprise receiving the SN of the at least one end device **101** and the vehicle identification number (VIN) from the vehicle **102.** Further, the method may comprise determining validity of the SN for the VIN by comparing the received SN and the received VIN with a SN and a VIN stored in the OEM cloud **107.** If the SN is valid for the VIN, the method may comprise authenticating the at least one end device **101** for onboarding the at least one end device **101** in the vehicle **102.** Alternatively, the method may comprise transmitting the reject message for rejecting the onboarding of the at least one end device **101** if the SN is found invalid for the VIN.

Further, for the performing the multi-level authentication, the method **700** may comprise performing a third level authentication of the at least one end device **101** see block **707.** The method at block **707** may be performed by the OAS **225.** It may be appreciated to a person skilled in the art that the order of performing the method steps **703, 705, 707** may vary as per the requirements for performing the present disclosure. For performing the third level authentication, the method may comprise transmitting a fifth authentication code to a communication device **109** of the vehicle owner. Further, the method may comprise receiving a response code from the communication device **109** of the vehicle owner. If the response code matches with the fifth authentication code, the method verifies the at least one end device **101** for onboarding in the vehicle **102.**

Finally, at block **709,** the method **700** may comprise installing software components related to the at least one end device **101** from the OEM cloud **107** to the vehicle **102,** upon performing the multi-level authentication. The method **700** at block **709** may be performed based on determining the availability of the software components in the OEM cloud **107** post performing successful authentication of the at least one end device **101.** If the software component is available on the OEM cloud **107,** the software component is installed in the vehicle **102** and the at least one end device **101** is onboarded to the vehicle **102.** In some embodiments, for installing the software components related to the at least end device **101,** the method may comprise receiving a request from the vehicle **102** for determining whether the software component related to the at least one end device **101** is available. Thereafter, the method may comprise transmitting a status message comprising a uniform resource indicator (URI) for installing the software components related to the at least one end device **101** to the vehicle **102.** However, if the software component is unavailable, the method may comprise transmitting an error message to the at least one end device **101** via the vehicle **102.**

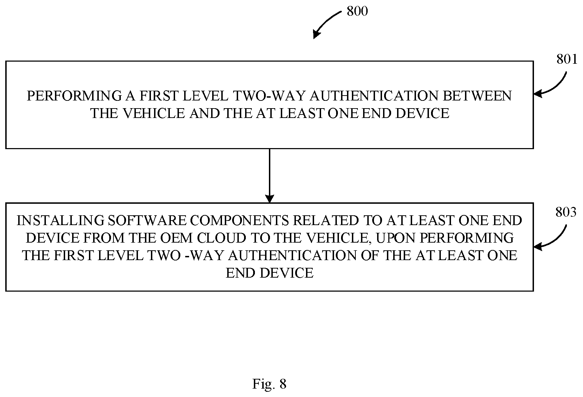

**Fig. 8** depicts a method **800** of performing onboarding of at least one end device **101** of a vehicle **102,** in accordance with an embodiment of the present disclosure. The method **800** may be described in the general context of computer executable instructions. Generally, computer executable instructions may include routines, programs, objects, components, data structures, procedures, modules, and functions, which perform specific functions or implement specific abstract data types.

The order in which the method **800** is described is not intended to be construed as a limitation, and any number of the described method blocks may be combined in any order to implement the method. Additionally, individual blocks may be deleted from the methods without departing from the scope of the subject matter described. Further, it may be noted that the method **800** may be performed by end device **101,** a computing unit **105,** an OEM cloud **107** or communication device **109** sub-components of the end device **101,** the computing unit **105,** the OEM cloud **107,** as shown in **Figs 2-4****.** The description of **Fig. 8** is provided with reference to Figs. **2-4****.**

At block **801,** the method **800** comprises performing a first level two way authentication between the vehicle **102** and the at least one end device **101.** The method **800** at step **801** may be performed either by OBC controller **305** or the OBS controller **317.**

In some embodiments, the first level two-way authentication between the vehicle **102** and the at least one end device **101** may be performed based on nonce values. The nonce values may be configurable and mutually agreed between the end device **101** and the vehicle **102.** In some embodiments, the nonce values may be configured by the OEM during the production of the vehicle **102** and the at least end device **101.** In some embodiments, the method may perform first level two-way authentication by exchanging encrypted messages between the at least one end device **101** and the vehicle **102.** In some embodiments, the encrypted messages may comprise EndDeviceNonce (EDN) value and VehicleNonce (VN) value that are stored in both the at least one end device **101** and the vehicle **102.**

In some embodiments, for performing the first level-two way authentication of the at least one end device **101,** the method may comprise performing a first way of authenticating the at least one end device **101** by the computing unit **105** of the vehicle **102** and performing a second way of authenticating the vehicle **102** by the at least one end device **101.** The first way of authenticating the at least one end device **101** by the computing unit **105** may comprise receiving a receiving a first encrypted message and a first authentication code corresponding to the encrypted message from the at least one end device **101.** The first encrypted message may be encrypted by at the at least one end device **101** using a first secret key stored in the at least one end device 101. Further, the method may extract the SN and the EDN value of the at least one end device 101 by decrypting the received first encrypted message using a second secret key stored in the computing unit **105** of the vehicle **102.** The first secret key and the second secret key may be same key. Further, the method comprises determining whether the extracted EDN value matches with a EDN value stored in the computing unit **105.** If the extracted EDN value does not match with the EDN value stored in the computing unit **105,** the method may comprise transmitting a reject message to the at least one end device **101** indicating authentication failure of the at least one end device **101** by the vehicle **102.** However, if the extracted EDN value matches with the EDN value stored in the computing unit **105,** the method may comprise performing a sub-level authentication using the extracted EDN value and the EDN value stored in the computing unit **105.**

Further, for performing the sub-level authentication, the method may comprise generating a second encrypted message and a second authentication code corresponding to the second encrypted message. The second encrypted message may comprise the extracted SN and the EDN value stored in the computing unit **105** of the vehicle **102.** Thereafter, the method may comprise determining whether the second authentication code matches with the received first authentication code. Further, the method may comprise authenticating the at least one end device **101** if the second authentication code matches with the first authentication code. Finally, the method may comprise transmitting the reject message indicating the authentication failure of the at least one end device **101** if the second authentication code does not match with the received first authentication code.

After successful authentication of the at least one end device **101** by the vehicle **102,** the at least end device **101** perform vehicle authentication by performing the second way of authentication. For performing the second way of authenticating the vehicle **102,** the method may comprise receiving a third encrypted message and a third authentication code. The third encrypted message may comprise the extracted SN of the at least one end device **101** and the VN value of the vehicle **102.** The method may further comprise determining whether the extracted VN value matches with a VN value stored in the at least one end device **101.** If the extracted VN value does not match with the VN value stored in the at least one end device **101,** the method may comprise transmitting a reject message indicating authentication failure of the vehicle **102.** Alternatively, If the extracted VN value matches with the VN value stored in the at least one end device **101,** the method may comprise performing a sub-level authentication with the extracted VN value and the VN value stored in the at least end device **101.**

For performing the sub-level authentication by the at least one end device **101,** the method comprises generating a fourth encrypted message and a fourth authentication code corresponding to the fourth encrypted message. The fourth encrypted message may comprise the extracted SN and the VN value stored in the at least one end device **101.** Thereafter, the method may comprise determining whether the fourth authentication code matches with the third authentication code. Upon determining that the fourth authentication does not match with the third authentication code, the method may comprise transmitting the reject message indicating the authentication failure of the vehicle **102.** Whereas, upon determining that the fourth authentication matches with the third authentication code, the method may comprise authenticating the vehicle **102** by the at least one end device **101.**

Post successful first level two way authentication between the at least one end device **101** and the vehicle **102,** the method may comprise updating the EDN value and the VN value based on configurable technique. Subsequently, the method may initiate another first level two-way authentication between the at least one end device **101** and the vehicle **102** based on the updated EDN value and the updated VN value. The method may be performed for reconnecting the vehicle **102** in case the at least one end device **101** is disconnected with the vehicle **102.**

Finally, at block **803,** the method **800** may comprise installing software components related to the at least one end device **101** from the OEM cloud **107** to the vehicle **102,** upon performing the first level two-way authentication. The method **800** at block **803** may be performed based on determining the availability of the software components in the OEM cloud **107** post performing successful authentication of the at least one end device **101** and the vehicle **102.** If the software component is available on the OEM cloud **107,** the software component is installed in the vehicle **102** and the at least one end device **101** is onboarded to the vehicle **102.**

In some embodiments, for installing the software components related to the at least end device **101,** the method may comprise receiving a request from the vehicle **102** for determining whether the software component related to the at least one end device **101** is available. Thereafter, the method may comprise transmitting a status message comprising a uniform resource indicator (URI) for installing the software components related to the at least one end device **101** to the vehicle **102.** However, if the software component is unavailable, the method may comprise transmitting an error message to the at least one end device **101** via the vehicle **102.**

In another embodiment, the at least one end device **101** may be authenticated through multiple levels however the authentication of the at least one end device **101** and the vehicle **102** may be performed differently. First, the at least one end device **101** may be fully authenticated with the vehicle **102** through multiple levels and then only vehicle authentication to the at least one end device **101** may be performed. There may be various benefit of this embodiment such that the new end device will not get access to the vehicle **102** till authenticity of the at least one end device **101** may be fully confirmed, thus this embodiment provides additional security while connecting the new end device to the vehicle **102.** After successful completion of all the authentication levels, software component availability corresponding to the new end device **101** may be checked and installed on the vehicle **102.**

In some embodiments, the multi-level authentication of the at least one end device may be performed by performing a first way of authenticating the at least one end device by the vehicle described at least in paragraphs [0102]-[0104]. Further, the multi-level authentication may be performed by performing the second level authentication of the at least one end device between the computing unit of the vehicle and the OEM cloud described at least in paragraphs [0086]-[0091]. Thereafter, the multi-level authentication of the at least one end device may be performed by performing the third level authentication of the at least one end device by the OEM cloud and the vehicle owner described at least in paragraphs [0089]-[0093] . Furthermore, the multi-level authentication may be performed by performing the second way of authenticating the vehicle by the at least one end device as described at least in paragraphs [00104]-[0105] . A detailed explanation of performing the multi-level authentication is omitted for the sake of brevity. Finally, upon performing the multi-level authentication of the at least one end device, the software components related to the at least one end device may be installed on the vehicle and the at least one end device may be onboarded to the vehicle after successful software installation. Moreover, a person skilled in the art may appreciate that any permutation and combinations of the features may be performed for performing the multi-level authentication of the at least one end device within the scope of the disclosure, and the description should not be taken into limiting account. In some embodiments, the onboarding process of the at least one end device may be performed by performing at least one of: the first level two-way authentication, the second level authentication, and the third level authentication of the at least one end device. In other embodiments, the mechanisms depicted as three separate levels (first level two-way authentication, the second level authentication, and the third level authentication) can be consolidated/combined into a single level.

A description of an embodiment with several components in communication with each other does not imply that all such components are required. On the contrary, a variety of optional components are described to illustrate the wide variety of possible embodiments of the disclosure.

When a single device or article is described herein, it will be clear that more than one device/article (whether they cooperate) may be used in place of a single device/article. Similarly, where more than one device or article is described herein (whether they cooperate), it will be clear that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the disclosure need not include the device itself.

Finally, the language used in the specification has been principally selected for readability and instructional purposes, and it may not have been selected to delineate or circumscribe the inventive subject matter. It is therefore intended that the scope of the disclosure be limited not by this detailed description, but rather by any claims that issue on an application based here on. Accordingly, the embodiments of the present disclosure are intended to be illustrative, but not limiting, of the scope of the disclosure, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Reference Numerals:**

| **Reference Numeral** | **Description** |
|---|---|
| 100 | Exemplary architecture |
| 101 | End devices |
| 102 | Vehicle |
| 103 | Zonal Controller |
| 105 | Computing unit |
| 107 | OEM cloud |
| 109 | Communication device |
| 201 | On-board client (OBC) |
| 203 | Memory |
| 205, 215 | Onboard server (OBS) |
| 207, 213 | OEM Authentication client (OAC) |
| 209 | Memory |
| 211 | External connectivity component |
| 217 | Memory |
| 219 | Software update client (SUC) |
| 221 | Software Update Checker (SUChecker) |
| 223 | Upgrade Download Client (UDC) |
| 225 | OEM Authentication Server (OAS) |
| 227 | OEM software component repository (OSCR) |
| 229 | OEM Operation notifier |
| 231 | OAS verifier |
| 233 | OAS database |
| 301, 313 | Nonce manager |
| 303, 315 | Onboard message generator (OBMG) |
| 305 | OBC controller |
| 307, 319 | Replay Attack Checker |
| 309, 321 | Onboard Timer (OBTIMER) |
| 311, 323 | I/O interface |
| 317 | OBS controller |

## Claims

1. A method of performing onboarding of at least one end device of a vehicle, the method comprising:
performing a multi-level authentication of the at least one end device, by:
in response to successful completion of a first level two-way authentication between the vehicle and the at least one end device, wherein performing the first level two-way authentication between the vehicle and the at least one end device, comprises:
exchanging encrypted messages between the at least one end device and the vehicle, wherein the encrypted messages comprise: an EndDeviceNonce (EDN) value and a vehicle nonce (VN) value that are stored in both the at least one end device and the vehicle;
updating the EDN value and the VN value based on the configurable technique, after performing the first level two-way authentication; and
initiating a subsequent first level two-way authentication between the at least one end device and the vehicle based on the updated EDN value and the updated VN value for reconnecting with the vehicle, if the at least one end device is disconnected with the vehicle: performing a second level authentication of the at least one end device, through the vehicle, by an Original Equipment Manufacturer, OEM, cloud, wherein performing the second level authentication comprises:
communicating: (i) a serial number (SN) of the at least one end device from the vehicle to the OEM cloud; (ii) a vehicle identification number (VIN) of the vehicle to the OEM cloud; and
determining by the OEM cloud if the SN is valid for the VIN; and
performing a third level authentication of the at least one end device, through a communication device of a vehicle owner, by the OEM cloud; and
in response to successful multi-level authentication of the at least one end device, installing, for onboarding the at least end device in the vehicle, one or more software components related to the at least one end device from the OEM cloud to the vehicle based on availability of the software components in the OEM cloud.

2. The method of claim 1, wherein the second level authentication of the at least one end device is performed by the OEM Cloud using a mechanism of checking for registered end devices in an OEM database of the OEM cloud, and/or,
wherein the third level authentication of the at least one end device is performed, through the communication device of a vehicle owner, by the OEM Cloud using a vehicle owner approval mechanism.

3. The method of claim 1 or 2, wherein performing the second level authentication of the at least one end device, through the vehicle, by the OEM cloud, comprises:
receiving the serial number, SN, of the at least one end device and the vehicle identification number, VIN, from the vehicle;
determining validity of the SN for the VIN by comparing the received SN and the received VIN with a SN and a VIN stored in the OEM cloud; and
authenticating the at least one end device for onboarding the at least one end device in the vehicle if the SN is valid for the VIN, or
transmitting an authentication failure message to the vehicle for rejecting the onboarding of the at least one end device in the vehicle if the SN of the at least one end device is not valid for the VIN.

4. The method of any of claims 1 to 3, wherein performing the third level authentication of the at least one end device, through the communication device of the vehicle owner, by the OEM cloud, comprises:
transmitting a fifth authentication code to the communication device of the vehicle owner;
receiving a response code from the communication device of the vehicle owner; and
verifying the at least one end device for onboarding in the vehicle when the response code matches with the fifth authentication code.

5. The method of any of claims 1 to 4, wherein installing the software components related to at least one end device from the OEM cloud to the vehicle, comprises:
receiving, by the OEM cloud, a request from the vehicle for determining whether the software components related to the at least one end device are available, after performing the successful multilevel authentication of the at least one end device;
transmitting, by the OEM cloud, a status message comprising a uniform resource indicator (URI) for installing the software components related to the at least one end device to the vehicle, if the software components download is available; and
transmitting, by the OEM cloud, an error message to the at least one end device via the vehicle if the software components related to the at least one end device is not available.

6. The method of any of claims 1 to 5, wherein the first level two-way authentication between the vehicle and the at least one end device is performed based on nonce values, wherein the nonce values are optionally configurable and mutually agreed between the at least one end device and the vehicle.

7. The method of claim 1, wherein the first level two-way authentication of the at least one end device comprises:
a first way of authenticating the at least one end device by a computing unit of the vehicle, wherein the computing unit is coupled to each of the at least one end device; and
a second way of authenticating the vehicle by at least one end device.

8. The method of claim7, wherein performing the first way of authenticating the at least one end device by the computing unit of the vehicle comprises:
receiving a first encrypted message and a first authentication code corresponding to the encrypted message from the at least one end device, wherein the first encrypted message comprises the SN and the EDN value of the at least one end device, and wherein the first encrypted message is encrypted by the at least one end device using a first secret key stored in the at least one end device;
extracting the SN and the EDN value of the at least one end device by decrypting the received first encrypted message using a second secret key stored in the computing unit of the vehicle, wherein the first secret key and the second secret key are same key;
determining whether the extracted EDN value matches with an EDN value stored in the computing unit of the vehicle;
transmitting a reject message to the at least one end device indicating authentication failure of the at least one end device if the extracted EDN value does not match with the EDN value stored in the computing unit of the vehicle; and
performing a sub-level of authentication with the extracted EDN and the EDN value stored in the computing unit if the extracted EDN value matches with the EDN value stored in the computing unit.

9. The method of claim 8, wherein performing the sub-level of authentication by the computing unit of the vehicle comprises:
generating, using the second secret key, a second encrypted message and a second authentication code corresponding to the second encrypted message, wherein the second encrypted message comprises the extracted SN and the EDN value stored in the computing unit of the vehicle;
determining whether the second authentication code matches with the received first authentication code;
transmitting an authentication success message indicating successful authentication of the at least one end device if the second authentication code matches with the first authentication code; or
transmitting the reject message indicating authentication failure of the at least one end device if the second authentication code does not match with the received first authentication code.

10. The method of any of claims 7 to 9, wherein the second way of authenticating the vehicle by at least one end device comprises:
receiving a third encrypted message and a third authentication code, wherein the third encrypted message comprises the extracted SN of the at least one end device and the VN value of the vehicle, and wherein the third encrypted message is encrypted by the computing unit using the second secret key stored in the vehicle;
extracting the SN and the VN value by decrypting the received third encrypted using the first secret key;
determining whether the extracted VN matches with a VN value stored in the at least one end device;
transmitting a reject message indicating authentication failure of the vehicle if the extracted VN value does not match with the VN value stored in the at least one end device; and
performing a second sub-level authentication if the extracted VN value matches with the VN value stored in the at least one end device.

11. The method of claim 10, wherein performing the second sub-level authentication by the at least one end device comprises:
generating, using the first secret key, a fourth encrypted message and a fourth authentication code corresponding to the fourth encrypted message, wherein the fourth encrypted message comprises the extracted SN and the VN value stored in the at least one end device;
determining whether the fourth authentication code matches with the third authentication code;
transmitting an authentication success message indicating successful authentication of the vehicle if the fourth authentication code matches with the third authentication code; or
transmitting the reject message indicating authentication failure of the vehicle if the fourth authentication code does not match with the third authentication code.

12. A system for performing onboarding of at least one end device of a vehicle, comprising:
a computing unit of the vehicle;
at least one end device coupled to the computing unit; and
an Original Equipment Manufacturer, OEM, cloud, coupled to the vehicle, wherein
the system is configured to perform the method of any of claims 1 to 11.

## Patentansprüche

1. Verfahren zur Durchführung von Onboarding von zumindest einer Endvorrichtung eines Fahrzeugs, wobei das Verfahren Folgendes umfasst:
Durchführen einer Mehrebenenauthentifizierung der zumindest einen Endvorrichtung durch:
als Reaktion auf erfolgreichen Abschluss einer Zweiwege-Authentifizierung erster Ebene zwischen dem Fahrzeug und der zumindest einen Endvorrichtung, wobei das Durchführen der Zweiwege-Authentifizierung erster Ebene zwischen dem Fahrzeug und der zumindest einen Endvorrichtung Folgendes umfasst:
Austauschen von verschlüsselten Nachrichten zwischen der zumindest einen Endvorrichtung und dem Fahrzeug, wobei die verschlüsselten Nachrichten Folgendes umfassen: einen Endvorrichtungs-Nonce(EDN-)Wert und einen Fahrzeug-Nonce(VN-)Wert, die sowohl in der zumindest einen Endvorrichtung als auch in dem Fahrzeug gespeichert sind;
Aktualisieren des EDN-Wertes und des VN-Wertes basierend auf der konfigurierbaren Technik, nach dem Durchführen der Zwei-Wege-Authentifizierung erster Ebene; und
Initiieren einer anschließenden Zwei-Wege-Authentifizierung erster Ebene zwischen der zumindest einen Endvorrichtung und dem Fahrzeug basierend auf dem aktualisierten EDN-Wert und dem aktualisierten VN-Wert zum Wiederverbinden mit dem Fahrzeug, falls die zumindest eine Endvorrichtung mit dem Fahrzeug getrennt ist: Durchführen einer Authentifizierung zweiter Ebene der zumindest einen Endvorrichtung, durch das Fahrzeug, durch eine Originalgerätehersteller-, OEM-Cloud, wobei das Durchführen der Authentifizierung zweiter Ebene Folgendes umfasst:
Kommunizieren: (i) einer Seriennummer (SN) der zumindest einen Endvorrichtung von dem Fahrzeug an die OEM-Cloud; (ii) einer Fahrzeugidentifikationsnummer (VIN) des Fahrzeugs an die OEM-Cloud; und
Bestimmen durch die OEM-Cloud, ob die SN für die VIN gültig ist; und
Durchführen einer Authentifizierung dritter Ebene der zumindest einen Endvorrichtung, durch eine Kommunikationsvorrichtung eines Fahrzeugbesitzers, durch die OEM-Cloud; und
als Reaktion auf erfolgreiche Mehrebenenauthentifizierung der zumindest einen Endvorrichtung Installieren, zum Onboarding der zumindest einen Endvorrichtung in dem Fahrzeug, von einer oder mehreren Software-Komponenten in Bezug auf die zumindest eine Endvorrichtung aus der OEM-Cloud auf dem Fahrzeug basierend auf Verfügbarkeit der Software-Komponenten in der OEM-Cloud.

2. Verfahren nach Anspruch 1, wobei die Authentifizierung zweiter Ebene der zumindest einen Endvorrichtung durch die OEM-Cloud unter Verwendung eines Mechanismus zum Prüfen auf registrierte Endvorrichtungen in einer OEM-Datenbank der OEM-Cloud durchgeführt wird, und/oder
wobei die Authentifizierung dritter Ebene der zumindest einen Endvorrichtung, durch die Kommunikationsvorrichtung eines Fahrzeugbesitzers, durch die OEM-Cloud unter Verwendung eines Fahrzeugbesitzergenehmigungsmechanismus durchgeführt wird.

3. Verfahren nach Anspruch 1 oder 2, wobei das Durchführen der Authentifizierung zweiter Ebene der zumindest einen Endvorrichtung, durch das Fahrzeug, durch die OEM-Cloud Folgendes umfasst:
Empfangen der Seriennummer, SN, der zumindest einen Endvorrichtung und der Fahrzeugidentifikationsnummer, VIN, von dem Fahrzeug;
Bestimmen von Gültigkeit der SN für die VIN durch Vergleichen der empfangenen SN und der empfangenen VIN mit einer SN und einer VIN, die in der OEM-Cloud gespeichert sind; und
Authentifizieren der zumindest einen Endvorrichtung zum Onboarding der zumindest einen Endvorrichtung in dem Fahrzeug, falls die SN gültig für die VIN ist, oder
Übertragen einer Authentifizierungsfehlernachricht an das Fahrzeug zum Ablehnen des Onboardings der zumindest einen Endvorrichtung in dem Fahrzeug, falls die SN der zumindest einen Endvorrichtung nicht gültig für die VIN ist.

4. Verfahren nach einem der Ansprüche 1 bis 3, wobei das Durchführen der Authentifizierung dritter Ebene der zumindest einen Endvorrichtung, durch die Kommunikationsvorrichtung des Fahrzeugbesitzers, durch die OEM-Cloud Folgendes umfasst:
Übertragen eines fünften Authentifizierungscodes an die Kommunikationsvorrichtung des Fahrzeugbesitzers;
Empfangen eines Antwortcodes von der Kommunikationsvorrichtung des Fahrzeugbesitzers; und
Verifizieren der zumindest einen Endvorrichtung zum Onboarding in dem Fahrzeug, wenn der Antwortcode mit dem fünften Authentifizierungscode übereinstimmt.

5. Verfahren nach einem der Ansprüche 1 bis 4, wobei das Installieren der Software-Komponenten in Bezug auf zumindest eine Endvorrichtung aus der OEM-Cloud auf dem Fahrzeug Folgendes umfasst:
Empfangen, durch die OEM-Cloud, einer Anforderung von dem Fahrzeug zum Bestimmen, ob die Software-Komponenten in Bezug auf die zumindest eine Endvorrichtung verfügbar sind, nach Durchführen der erfolgreichen Mehrebenenauthentifizierung der zumindest einen Endvorrichtung;
Übertragen, durch die OEM-Cloud, einer Statusnachricht, die einen einheitlichen Ressourcenindikator (URI) zum Installieren der Softwarekomponenten in Bezug auf die zumindest eine Endvorrichtung auf dem Fahrzeug umfasst, falls die Softwarekomponenten zum Herunterladen verfügbar sind; und
Übertragen, durch die OEM-Cloud, einer Fehlernachricht an die zumindest eine Endvorrichtung über das Fahrzeug, falls die Software-Komponenten in Bezug auf die zumindest eine Endvorrichtung nicht verfügbar sind.

6. Verfahren nach einem der Ansprüche 1 bis 5, wobei die Zweiwege-Authentifizierung erster Ebene zwischen dem Fahrzeug und der zumindest einen Endvorrichtung basierend auf Nonce-Werten durchgeführt wird, wobei die Nonce-Werte optional konfigurierbar sind und zwischen der zumindest einen Endvorrichtung und dem Fahrzeug gegenseitig vereinbart sind.

7. Verfahren nach Anspruch 1, wobei die Zwei-Wege-Authentifizierung erster Ebene der zumindest einen Endvorrichtung Folgendes umfasst:
einen ersten Weg zum Authentifizieren der zumindest einen Endvorrichtung durch eine Recheneinheit des Fahrzeugs, wobei die Recheneinheit an jede von der zumindest einen Endvorrichtung gekoppelt ist; und
einen zweiten Weg zum Authentifizieren des Fahrzeugs durch zumindest eine Endvorrichtung.

8. Verfahren nach Anspruch 7, wobei das Durchführen des ersten Weges zum Authentifizieren der zumindest einen Endvorrichtung durch die Recheneinheit des Fahrzeugs Folgendes umfasst:
Empfangen einer ersten verschlüsselten Nachricht und eines ersten Authentifizierungscodes entsprechend der verschlüsselten Nachricht von der zumindest einen Endvorrichtung, wobei die erste verschlüsselte Nachricht den SN- und den EDN-Wert der zumindest einen Endvorrichtung umfasst, und wobei die erste verschlüsselte Nachricht durch die zumindest eine Endvorrichtung unter Verwendung eines ersten geheimen Schlüssels, der in der zumindest einen Endvorrichtung gespeichert ist, verschlüsselt ist;
Extrahieren des SN- und des EDN-Wertes der zumindest einen Endvorrichtung durch Entschlüsseln der empfangenen ersten verschlüsselten Nachricht unter Verwendung eines zweiten geheimen Schlüssels, der in der Recheneinheit des Fahrzeugs gespeichert ist, wobei der erste geheime Schlüssel und der zweite geheime Schlüssel derselbe Schlüssel sind;
Bestimmen, ob der extrahierte EDN-Wert mit einem EDN-Wert, der in der Recheneinheit des Fahrzeugs gespeichert ist, übereinstimmt;
Übertragen einer Ablehnungsnachricht an die zumindest eine Endvorrichtung, die Authentifizierungsfehler der zumindest einen Endvorrichtung angibt, falls der extrahierte EDN-Wert nicht mit dem EDN-Wert, der in der Recheneinheit des Fahrzeugs gespeichert ist, übereinstimmt; und
Durchführen einer Unterebenenauthentifizierung mit dem extrahierten EDN- und dem EDN-Wert, der in der Recheneinheit gespeichert ist, falls der extrahierte EDN-Wert mit dem EDN-Wert, der in der Recheneinheit gespeichert ist, übereinstimmt.

9. Verfahren nach Anspruch 8, wobei das Durchführen der Unterebenenauthentifizierung durch die Recheneinheit des Fahrzeugs Folgendes umfasst:
Erzeugen, unter Verwendung des zweiten geheimen Schlüssels, einer zweiten verschlüsselten Nachricht und eines zweiten Authentifizierungscodes entsprechend der zweiten verschlüsselten Nachricht, wobei die zweite verschlüsselte Nachricht den extrahierten SN- und den EDN-Wert, der in der Recheneinheit des Fahrzeugs gespeichert ist, umfasst;
Bestimmen, ob der zweite Authentifizierungscode mit dem empfangenen ersten Authentifizierungscode übereinstimmt;
Übertragen einer Authentifizierungserfolgsnachricht, die erfolgreiche Authentifizierung der zumindest einen Endvorrichtung angibt, falls der zweite Authentifizierungscode mit dem ersten Authentifizierungscode übereinstimmt; oder
Übertragen der Ablehnungsnachricht, die Authentifizierungsfehler der zumindest einen Endvorrichtung angibt, falls der zweite Authentifizierungscode nicht mit dem empfangenen ersten Authentifizierungscode übereinstimmt.

10. Verfahren nach einem der Ansprüche 7 bis 9, wobei der zweite Weg zum Authentifizieren des Fahrzeugs durch zumindest eine Endvorrichtung Folgendes umfasst:
Empfangen einer dritten verschlüsselten Nachricht und eines dritten Authentifizierungscodes, wobei die dritte verschlüsselte Nachricht die extrahierte SN der zumindest einen Endvorrichtung und den VN-Wert des Fahrzeugs umfasst, und wobei die dritte verschlüsselte Nachricht durch die Recheneinheit unter Verwendung des zweiten geheimen Schlüssels, der in dem Fahrzeug gespeichert ist, verschlüsselt ist;
Extrahieren des SN- und des VN-Wertes durch Entschlüsseln der empfangenen dritten verschlüsselten unter Verwendung des ersten geheimen Schlüssels;
Bestimmen, ob der extrahierte VN mit einem VN-Wert, der in der zumindest einen Endvorrichtung gespeichert ist, übereinstimmt;
Übertragen einer Ablehnungsnachricht, die Authentifizierungsfehler des Fahrzeugs angibt, falls der extrahierte VN-Wert nicht mit dem VN-Wert, der in der zumindest einen Endvorrichtung gespeichert ist, übereinstimmt; und
Durchführen einer zweiten Unterebenenauthentifizierung, falls der extrahierte VN-Wert mit dem VN-Wert, der in der zumindest einen Endvorrichtung gespeichert ist, übereinstimmt.

11. Verfahren nach Anspruch 10, wobei das Durchführen der zweiten Unterebenenauthentifizierung durch die zumindest eine Endvorrichtung Folgendes umfasst:
Erzeugen, unter Verwendung des ersten geheimen Schlüssels, einer vierten verschlüsselten Nachricht und eines vierten Authentifizierungscodes entsprechend der vierten verschlüsselten Nachricht, wobei die vierte verschlüsselte Nachricht die extrahierte SN und den VN-Wert, der in der zumindest einen Endvorrichtung gespeichert ist, umfasst;
Bestimmen, ob der vierte Authentifizierungscode mit dem dritten Authentifizierungscode übereinstimmt;
Übertragen einer Authentifizierungserfolgsnachricht, die erfolgreiche Authentifizierung des Fahrzeugs angibt, falls der vierte Authentifizierungscode mit dem dritten Authentifizierungscode übereinstimmt; oder
Übertragen der Ablehnungsnachricht, die Authentifizierungsfehler des Fahrzeugs angibt, falls der vierte Authentifizierungscode nicht mit dem dritten Authentifizierungscode übereinstimmt.

12. System zur Durchführung von Onboarding von zumindest einer Endvorrichtung eines Fahrzeugs, umfassend:
eine Recheneinheit des Fahrzeugs;
zumindest eine Endvorrichtung, die an die Recheneinheit gekoppelt ist; und
einem Originalgerätehersteller-, OEM-Cloud, die an das Fahrzeug gekoppelt ist, wobei
das System dazu konfiguriert ist, das Verfahren nach einem der Ansprüche 1 bis 11 durchzuführen.

## Revendications

1. Procédé de réalisation de l'intégration d'au moins un dispositif terminal d'un véhicule, le procédé comprenant :
la réalisation d'une authentification multiniveau de l'au moins un dispositif terminal, par :
en réponse à la réussite d'une authentification bidirectionnelle de premier niveau entre le véhicule et l'au moins un dispositif terminal, dans lequel la réalisation de l'authentification bidirectionnelle de premier niveau entre le véhicule et l'au moins un dispositif terminal, comprend :
l'échange de messages chiffrés entre l'au moins un dispositif terminal et le véhicule, dans lequel les messages chiffrés comprennent : une valeur EndDeviceNonce (EDN) et une valeur Vehiclenonce (VN) qui sont stockées à la fois dans l'au moins un dispositif terminal et dans le véhicule ;
la mise à jour de la valeur EDN et de la valeur VN sur la base de la technique configurable, après la réalisation de l'authentification bidirectionnelle de premier niveau ; et
l'initiation d'une authentification bidirectionnelle de premier niveau ultérieure entre l'au moins un dispositif terminal et le véhicule sur la base de la valeur EDN mise à jour et de la valeur VN mise à jour pour se reconnecter au véhicule, si l'au moins un dispositif terminal est déconnecté du véhicule :
la réalisation d'une authentification de deuxième niveau de l'au moins un dispositif terminal, par l'intermédiaire du véhicule, par un nuage de fabricant d'équipement d'origine, OEM, dans lequel la réalisation de l'authentification de deuxième niveau comprend :
la communication : (i) d'un numéro de série (SN) de l'au moins un dispositif terminal du véhicule au nuage OEM ; (ii) d'un numéro d'identification de véhicule (VIN) du véhicule au nuage OEM ; et
le fait de déterminer, par le nuage OEM, si le SN est valide pour le VIN ; et
la réalisation d'une authentification de troisième niveau de l'au moins un dispositif terminal, par l'intermédiaire d'un dispositif de communication d'un propriétaire de véhicule, par le nuage OEM ; et
en réponse à une authentification multiniveau réussie de l'au moins un dispositif terminal, l'installation, pour intégrer l'au moins un dispositif terminal dans le véhicule, d'un ou plusieurs composants logiciels liés à l'au moins un dispositif terminal, du nuage OEM au véhicule, sur la base de la disponibilité des composants logiciels dans le nuage OEM.

2. Procédé de la revendication 1, dans lequel l'authentification de deuxième niveau de l'au moins un dispositif terminal est réalisée par le nuage OEM au moyen d'un mécanisme de vérification de dispositifs terminaux enregistrés dans une base de données OEM du nuage OEM, et/ou,
dans lequel l'authentification de troisième niveau de l'au moins un dispositif terminal est réalisée, par l'intermédiaire du dispositif de communication d'un propriétaire de véhicule, par le nuage OEM au moyen d'un mécanisme d'approbation de propriétaire de véhicule.

3. Procédé de la revendication 1 ou 2, dans lequel la réalisation de l'authentification de deuxième niveau de l'au moins un dispositif terminal, par l'intermédiaire du véhicule, par le nuage OEM, comprend :
la réception, en provenance du véhicule, du numéro de série, SN, de l'au moins un dispositif terminal et du numéro d'identification de véhicule, VIN ;
la détermination de la validité du SN pour le VIN par comparaison du SN reçu et du VIN reçu avec un SN et un VIN stockés dans le nuage OEM ; et
l'authentification de l'au moins un dispositif terminal pour intégrer l'au moins un dispositif terminal dans le véhicule si le SN est valide pour le VIN, ou
la transmission d'un message d'échec d'authentification au véhicule pour rejeter l'intégration de l'au moins un dispositif terminal dans le véhicule si le SN de l'au moins un dispositif terminal n'est pas valide pour le VIN.

4. Procédé de l'une quelconque des revendications 1 à 3, dans lequel la réalisation de l'authentification de troisième niveau de l'au moins un dispositif terminal, par l'intermédiaire du dispositif de communication du propriétaire de véhicule, par le nuage OEM, comprend :
la transmission d'un cinquième code d'authentification au dispositif de communication du propriétaire de véhicule ;
la réception d'un code de réponse provenant du dispositif de communication du propriétaire de véhicule ; et
la vérification de l'au moins un dispositif terminal pour l'intégration dans le véhicule lorsque le code de réponse concorde avec le cinquième code d'authentification.

5. Procédé de l'une quelconque des revendications 1 à 4, dans lequel l'installation des composants logiciels liés à au moins un dispositif terminal du nuage OEM vers le véhicule, comprend :
la réception, par le nuage OEM, d'une demande provenant du véhicule pour déterminer si les composants logiciels liés à l'au moins un dispositif terminal sont disponibles, après la réalisation de l'authentification multiniveau réussie de l'au moins un dispositif terminal ;
la transmission, par le nuage OEM, d'un message d'état comprenant un indicateur de ressource uniforme (URI) pour installer les composants logiciels liés à l'au moins un dispositif terminal au véhicule, si le téléchargement de composants logiciels est disponible ; et
la transmission, par le nuage OEM, d'un message d'erreur à l'au moins un dispositif terminal par l'intermédiaire du véhicule si les composants logiciels liés à l'au moins un dispositif terminal ne sont pas disponibles.

6. Procédé de l'une quelconque des revendications 1 à 5, dans lequel l'authentification bidirectionnelle de premier niveau entre le véhicule et l'au moins un dispositif terminal est réalisée sur la base de valeurs de nonce, dans lequel les valeurs de nonce sont éventuellement configurables et mutuellement convenues entre l'au moins un dispositif terminal et le véhicule.

7. Procédé de la revendication 1, dans lequel l'authentification bidirectionnelle de premier niveau de l'au moins un dispositif terminal comprend :
une première manière d'authentifier l'au moins un dispositif terminal par une unité de calcul du véhicule, dans lequel l'unité de calcul est couplée à chacun de l'au moins un dispositif terminal ; et
une seconde manière d'authentifier le véhicule par au moins un dispositif terminal.

8. Procédé de la revendication 7, dans lequel la réalisation de la première manière d'authentifier l'au moins un dispositif terminal par l'unité de calcul du véhicule comprend :
la réception d'un premier message chiffré et d'un premier code d'authentification correspondant au message chiffré provenant de l'au moins un dispositif terminal, dans lequel le premier message chiffré comprend le SN et la valeur EDN de l'au moins un dispositif terminal, et dans lequel le premier message chiffré est chiffré par l'au moins un dispositif terminal au moyen d'une première clé secrète stockée dans l'au moins un dispositif terminal ;
l'extraction du SN et de la valeur EDN de l'au moins un dispositif terminal par déchiffrement du premier message chiffré reçu au moyen d'une seconde clé secrète stockée dans l'unité de calcul du véhicule, dans lequel la première clé secrète et la seconde clé secrète sont la même clé ;
le fait de déterminer si la valeur EDN extraite concorde avec une valeur EDN stockée dans l'unité de calcul du véhicule ;
la transmission d'un message de rejet à l'au moins un dispositif terminal indiquant un échec d'authentification de l'au moins un dispositif terminal si la valeur EDN extraite ne concorde pas avec la valeur EDN stockée dans l'unité de calcul du véhicule ; et
la réalisation d'un sous-niveau d'authentification avec l'EDN extrait et la valeur EDN stockée dans l'unité de calcul si la valeur EDN extraite concorde avec la valeur EDN stockée dans l'unité de calcul.

9. Procédé de la revendication 8, dans lequel la réalisation du sous-niveau d'authentification par l'unité de calcul du véhicule comprend :
la génération, au moyen de la seconde clé secrète, d'un deuxième message chiffré et d'un deuxième code d'authentification correspondant au deuxième message chiffré, dans lequel le deuxième message chiffré comprend le SN extrait et la valeur EDN stockée dans l'unité de calcul du véhicule ;
le fait de déterminer si le deuxième code d'authentification concorde avec le premier code d'authentification reçu ;
la transmission d'un message de réussite d'authentification indiquant une authentification réussie de l'au moins un dispositif terminal si le deuxième code d'authentification concorde avec le premier code d'authentification ; ou
la transmission du message de rejet indiquant un échec d'authentification de l'au moins un dispositif terminal si le deuxième code d'authentification ne concorde pas avec le premier code d'authentification reçu.

10. Procédé de l'une quelconque des revendications 7 à 9, dans lequel la seconde manière d'authentifier le véhicule par au moins un dispositif terminal comprend :
la réception d'un troisième message chiffré et d'un troisième code d'authentification, dans lequel le troisième message chiffré comprend le SN extrait de l'au moins un dispositif terminal et la valeur VN du véhicule, et dans lequel le troisième message chiffré est chiffré par l'unité de calcul au moyen de la seconde clé secrète stockée dans le véhicule ;
l'extraction du SN et de la valeur VN par déchiffrement du troisième reçu chiffré au moyen de la première clé secrète ;
le fait de déterminer si le VN extrait correspond à une valeur VN stockée dans l'au moins un dispositif terminal ;
la transmission d'un message de rejet indiquant un échec d'authentification du véhicule si la valeur VN extraite ne concorde pas avec la valeur VN stockée dans l'au moins un dispositif terminal ; et
la réalisation d'un second sous-niveau d'authentification si la valeur VN extraite concorde avec la valeur VN stockée dans l'au moins un dispositif terminal.

11. Procédé de la revendication 10, dans lequel la réalisation du second sous-niveau d'authentification par l'au moins un dispositif terminal comprend :
la génération, au moyen de la première clé secrète, d'un quatrième message chiffré et d'un quatrième code d'authentification correspondant au quatrième message chiffré, dans lequel le quatrième message chiffré comprend le SN extrait et la valeur VN stockée dans l'au moins un dispositif terminal ;
le fait de déterminer si le quatrième code d'authentification correspond au troisième code d'authentification ;
la transmission d'un message de réussite d'authentification indiquant une authentification réussie du véhicule si le quatrième code d'authentification concorde avec le troisième code d'authentification ; ou
la transmission du message de rejet indiquant un échec d'authentification du véhicule si le quatrième code d'authentification ne concorde pas avec le troisième code d'authentification.

12. Système pour réaliser l'intégration d'au moins un dispositif terminal d'un véhicule, comprenant :
une unité de calcul du véhicule ;
au moins un dispositif terminal couplé à l'unité de calcul ; et
un nuage de fabricant d'équipement d'origine, OEM, couplé au véhicule,
dans lequel le système est configuré pour réaliser le procédé de l'une quelconque des revendications 1 à 11.
